# EUROPEAN PATENT APPLICATION

(11) **EP 4 782 745 A1**
(43) Date of publication of application: **29.07.2026**
(21) Application number: 25227680.3
(22) Date of filing: 30.12.2025
(51) Int. Cl.: F21V 8/00

(54) **LIGHT-EMITTING DEVICE**

(30) Priority: 22.01.2025 JP 2025009389
(71) Applicant: NICHIA CORPORATION, Tokushima 774-8601 (JP)
(72) Inventor: KITAHARA, Wataru, 774-8601 Anan-shi, Tokushima (JP); SHINOHARA, Yoshinori, 774-8601 Anan-shi, Tokushima (JP); MIURA, Soichiro, 774-8601 Anan-shi, Tokushima (JP)
(74) Representative: Betten & Resch

(57) **Abstract**

A light-emitting device includes: a light source configured to emit a laser light; a first optical member configured to split the laser light into first branched laser light and second branched laser light by reflecting the first branched laser light and transmitting the second branched laser light; and a first diffusing fiber including: a first end part on which at least a portion of the first branched laser light reflected by the first optical member is incident, and a second end part on which at least a portion of the second branched laser light is incident.

## Description

### CROSS-REFERENCE TO RELATED APPLICATIONS

This application is based upon and claims the benefit of priority from Japanese Patent Application No. 2025-009389, filed on January 22, 2025, the entire contents of which are incorporated herein by reference.

### FIELD

Embodiments described herein relate generally to a light-emitting device.

### BACKGROUND

In light-emitting devices used in vehicles and the like, there is a structure in which laser light irradiated from a light source enters a diffusing fiber and illuminates the entire diffusing fiber. For example, see Japanese Patent Publication No. 2004-341128. However, in such a structure, one end of the diffusing fiber into which the laser light enters may be undesirably brighter than the other end. It is desirable to illuminate the diffusing fiber of the light-emitting device more uniformly.

### SUMMARY

An object of certain embodiments is to provide a light-emitting device and a vehicle that can illuminate a diffusing fiber more uniformly.

A light-emitting device according to one embodiment of the present invention includes a light source configured to emit a laser light; a first optical member configured to split the laser light into first branched laser light and second branched laser light by reflecting the first branched laser light and transmitting the second branched laser light; and a first diffusing fiber including a first end part on which at least a portion of the first branched laser light reflected by the first optical member is to be incident, and a second end part on which at least a portion of the second branched laser light is to be incident.

According to an embodiment of the invention, a light-emitting device and a vehicle can be realized in which a diffusing fiber can be illuminated more uniformly.

### BRIEF DESCRIPTION OF THE DRAWINGS

FIG. 1 is a perspective view showing a light-emitting device according to a first embodiment;
FIG. 2 is an explanatory drawing showing the light-emitting device according to the first embodiment;
FIG. 3 is an explanatory drawing showing a light-emitting device according to a first modification of the first embodiment;
FIG. 4 is an explanatory drawing showing a light-emitting device according to a second modification of the first embodiment;
FIG. 5 is an explanatory drawing showing a light-emitting device according to a third modification of the first embodiment;
FIG. 6 is an explanatory drawing showing a light-emitting device according to a fourth modification of the first embodiment;
FIG. 7 is an explanatory drawing showing a light-emitting device according to a fifth modification of the first embodiment;
FIG. 8 is an explanatory drawing showing a light-emitting device according to a sixth modification of the first embodiment;
FIG. 9 is an explanatory drawing showing a light-emitting device according to a seventh modification of the first embodiment;
FIG. 10 is an explanatory drawing showing a light-emitting device according to a second embodiment;
FIG. 11 is an explanatory drawing showing a light-emitting device according to a third embodiment;
FIG. 12 is an explanatory drawing showing a light-emitting device according to a fourth embodiment;
FIG. 13 is an explanatory drawing showing a light-emitting device according to a fifth embodiment;
FIG. 14 is an explanatory drawing showing a light-emitting device according to a sixth embodiment;
FIG. 15 is an explanatory drawing showing a light-emitting device according to a first modification of the sixth embodiment;
FIG. 16 is an explanatory drawing showing a light-emitting device according to a second modification of the sixth embodiment;
FIG. 17 is a perspective view showing a vehicle including a light-emitting device according to an embodiment; and
FIG. 18 is an explanatory drawing showing a tail lamp including the light-emitting device according to the embodiment.

### DETAILED DESCRIPTION

Certain embodiments of the invention will now be described with reference to the drawings.

The drawings are schematic or conceptual, and the relationships between the thickness and width of portions, the proportions of sizes among portions, etc., are not necessarily the same as the actual values. Even when the same portion is illustrated in multiple drawings, the dimensions and proportions may be illustrated differently among the drawings.

In the specification and drawings, components similar to those already described are given with the same reference numerals, and a detailed description thereof is omitted as appropriate.

### Light-emitting device

### First embodiment

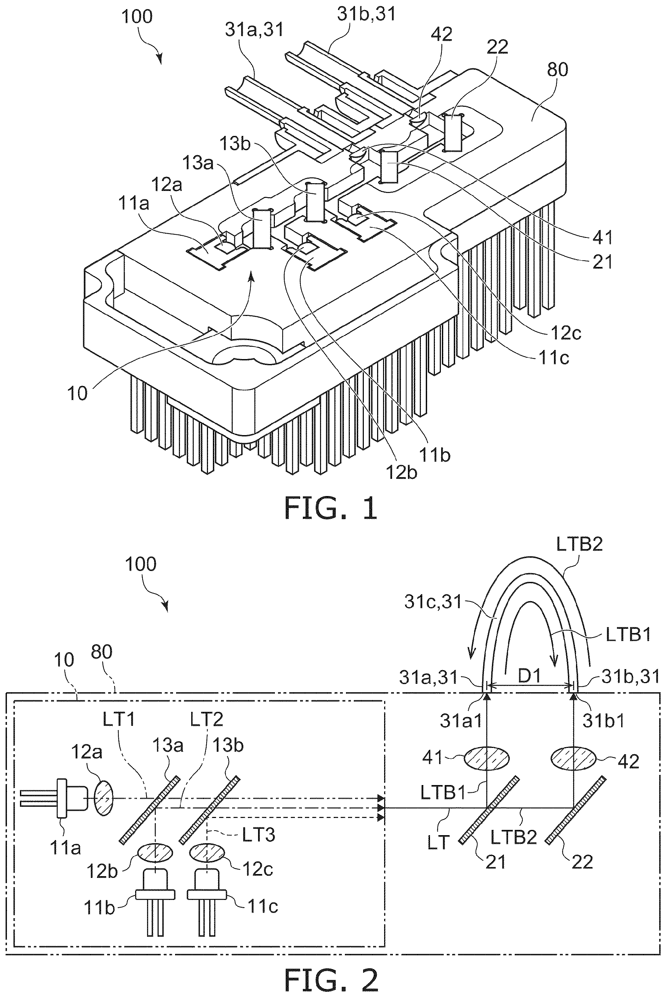

FIG. 1 is a perspective view showing a light-emitting device according to a first embodiment.

FIG. 2 is an explanatory drawing showing the light-emitting device according to the first embodiment.

As shown in FIGS. 1 and 2, the light-emitting device 100 according to the first embodiment includes a light source 10, a first optical member 21, and a first diffusing fiber 31.

### Light source

The light source 10 irradiates a laser light LT. In the light-emitting device 100, the light source 10 includes a first light source part 11a, a second light source part 11b, a third light source part 11c, a first collimating lens 12a, a second collimating lens 12b, a third collimating lens 12c, a first dichroic mirror 13a, and a second dichroic mirror 13b.

The first light source part 11a emits a first laser light LT1. The first laser light LT1 has a first peak wavelength. The first laser light LT1 is, for example, a blue laser light. The first peak wavelength is, for example, not less than 400 nm but less than 500 nm. The first light source part 11a is, for example, a laser diode. The first laser light LT1 may be a green laser light or a red laser light.

The second light source part 11b emits a second laser light LT2. The second laser light LT2 has a second peak wavelength. The second peak wavelength is different from the first peak wavelength. For example, the difference between the second peak wavelength and the first peak wavelength is not less than 10 nm. The second laser light LT2 is, for example, a green laser light. The second peak wavelength is, for example, not less than 500 nm but less than 600 nm. The second light source part 11b is, for example, a laser diode. The second laser light LT2 may be a blue laser light or a red laser light.

The third light source part 11c emits a third laser light LT3. The third laser light LT3 has a third peak wavelength. The third peak wavelength is different from the first and second peak wavelengths. For example, each of the differences between the third peak wavelength and the second peak wavelength and between the third peak wavelength and the first peak wavelength is not less than 10 nm. The third laser light LT3 is, for example, a red laser light. The third peak wavelength is, for example, not less than 600 nm and not more than 700 nm. The third light source part 11c is, for example, a laser diode. The third laser light LT3 may be a blue laser light or a green laser light.

The first collimating lens 12a collimates the first laser light LT1. The second collimating lens 12b collimates the second laser light LT2. The third collimating lens 12c collimates the third laser light LT3. As used herein, the term "collimate" means that the light rays become parallel light. The term "parallel" includes a deviation of ±3°.

The first dichroic mirror 13a transmits the first laser light LT1 and reflects the second laser light LT2. The second dichroic mirror 13b transmits the first laser light LT1 and the second laser light LT2 and reflects the third laser light LT3.

### First optical member

The first optical member 21 splits the laser light LT into a first branched laser light LTB1 and a second branched laser light LTB2. The first optical member 21 reflects the first branched laser light LTB1 and transmits the second branched laser light LTB2. The first optical member 21 is, for example, a beam splitter.

### First diffusing fiber

The first diffusing fiber 31 includes a first end part 31a, a second end part 31b, and a first intermediate part 31c. The first end part 31a is positioned at one end of the first diffusing fiber 31. The second end part 31b is positioned at the other end of the first diffusing fiber 31. The first intermediate part 31c is positioned between the first end part 31a and the second end part 31b. At least a portion of the first branched laser light LTB1 reflected by the first optical member 21 is incident on the first end part 31a. At least a portion of the second branched laser light LTB2 is incident on the second end part 31b.

The first end part 31a includes a first incident surface 31a1 on which the first branched laser light LTB1 is incident. The second end part 31b includes a second incident surface 31b1 on which the second branched laser light LTB2 is incident. In the light-emitting device 100, the first incident surface 31a1 and the second incident surface 31b1 are arranged to be oriented in the same direction. A distance D1 between the center of the first incident surface 31a1 and the center of the second incident surface 31b1 is, for example, not less than 1 mm and not more than 100 mm.

The light-emitting device 100 also includes a second optical member 22, a first condensing lens 41, a second condensing lens 42, and a housing 80. The second optical member 22, the first condensing lens 41, the second condensing lens 42, and the housing 80 are optional.

### Second optical member

The second optical member 22 reflects at least a portion of the second branched laser light LTB2. In the light-emitting device 100, the second optical member 22 is a mirror that reflects the entirety of the second branched laser light LTB2.

### First and second condensing lenses

The first condensing lens 41 condenses the first branched laser light LTB1 and causes the first branched laser light LTB1 to be incident on the first end part 31a of the first diffusing fiber 31. The second condensing lens 42 condenses the second branched laser light LTB2 and causes the second branched laser light LTB2 to be incident on the second end part 31b of the first diffusing fiber 31.

### Housing

The light source 10, the first optical member 21, the second optical member 22, the first condensing lens 41, and the second condensing lens 42 are located inside the housing 80. The housing 80 holds the light source 10, the first optical member 21, the second optical member 22, the first condensing lens 41, and the second condensing lens 42. The first diffusing fiber 31 is located outside the housing 80. The first and second end parts 31a and 31b of the first diffusing fiber 31 are connected to the housing 80.

In the light-emitting device 100, the first laser light LT1 that is emitted from the first light source part 11a is collimated by the first collimating lens 12a and transmitted through the first dichroic mirror 13a. The second laser light LT2 that is emitted from the second light source part 11b is collimated by the second collimating lens 12b and reflected by the first dichroic mirror 13a. The collimated first laser light LT1 and the collimated second laser light LT2 are wavelength-combined by the first dichroic mirror 13a. The laser light in which the first laser light LT1 and the second laser light LT2 are combined is transmitted through the second dichroic mirror 13b. The third laser light LT3 that is emitted from the third light source part 11c is collimated by the third collimating lens 12c and reflected by the second dichroic mirror 13b. The collimated third laser light LT3 and the laser light in which the first laser light LT1 and the second laser light LT2 are combined are wavelength-combined by the second dichroic mirror 13b. As a result, the light source 10 irradiates the laser light LT in which the first laser light LT1, the second laser light LT2, and the third laser light LT3 are combined. For example, when the first laser light LT1 is a blue laser light, the second laser light LT2 is a green laser light, and the third laser light LT3 is a red laser light, the light source 10 emits the laser light LT formed by wavelength-combining the red laser light, the green laser light, and the blue laser light.

The laser light LT that is emitted from the light source 10 is split into the first branched laser light LTB1 and the second branched laser light LTB2 by the first optical member 21. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. For example, a portion of the first branched laser light LTB1 incident on the first end part 31a is emitted from the second end part 31b. The second branched laser light LTB2 is reflected by the second optical member 22, condensed by the second condensing lens 42, and incident on the second end part 31b of the first diffusing fiber 31. The second branched laser light LTB2 incident on the second end part 31b passes through the first intermediate part 31c and travels toward the first end part 31a. For example, a portion of the second branched laser light LTB2 incident on the second end part 31b is emitted from the first end part 31a.

Thus, in the light-emitting device 100, by splitting the laser light LT emitted from the light source 10 into the first branched laser light LTB1 and the second branched laser light LTB2 and by causing the first branched laser light LTB1 and the second branched laser light LTB2 to enter the first and second end parts 31a and 31b of the first diffusing fiber 31, the first diffusing fiber 31 can be illuminated more uniformly than when a laser light is incident only on the one end of the first diffusing fiber 31. Also, the size of the light-emitting device 100 can be smaller than that when each of light sources is located at a respective one of two ends of the first diffusing fiber 31 without splitting the laser light LT into the first branched laser light LTB1 and the second branched laser light LTB2.

In the light-emitting device 100, the light source 10 emits the laser light in which the first laser light LT1 emitted from the first light source part 11a and the second laser light LT2 emitted from the second light source part 11b are combined, so that the output of the laser light LT can be increased.

In the light-emitting device 100, the laser light LT of various colors can be incident on the first diffusing fiber 31 because the first laser light LT1 has the first peak wavelength and the second laser light LT2 has the second peak wavelength, which is different from the first peak wavelength.

In the light-emitting device 100, the light source 10 emits the laser light LT formed by wavelength-combining a red laser light, a green laser light, and a blue laser light, and thus white laser light LT can be incident on the first diffusing fiber 31. It is preferable that the radiant flux of the red laser light is greater than the radiant flux of the green laser light and that the radiant flux of the green laser light is greater than the radiant flux of the blue laser light. For example, by setting the first laser light LT1 emitted from the first light source part 11a to be a blue laser light, the second laser light LT2 emitted from the second light source part 11b to be a green laser light, and the third laser light LT3 emitted from the third light source part 11c to be a red laser light, the optical path length of the red laser light can be less than the optical path length of the green laser light, and the optical path length of the green laser light can be less than the optical path length of the blue laser light. As a result, the radiant flux of the red laser light can be greater than the radiant flux of the green laser light, and the radiant flux of the green laser light can be greater than the radiant flux of the blue laser light.

In the light-emitting device 100, by arranging the first incident surface 31a1 and the second incident surface 31b1 to be oriented in the same direction, routing and bending of the first diffusing fiber 31 when arranging the first diffusing fiber 31 can be reduced, which allows for increasing the degrees of freedom of the design when the light-emitting device 100 is turned on.

In the light-emitting device 100, by setting the distance D1 between the center of the first incident surface 31a1 and the center of the second incident surface 31b1 to be not less than 1 mm and not more than 100 mm, the difference between the distance from the light source 10 to the first condensing lens 41 and the distance from the light source 10 to the second condensing lens 42 can be reduced. Therefore, the influence of divergence of the laser light can be reduced, and the condensing efficiencies of the first condensing lens 41 and the second condensing lens 42 can be equal. Also, the size of the light-emitting device 100 can be reduced.

### First modification of first embodiment

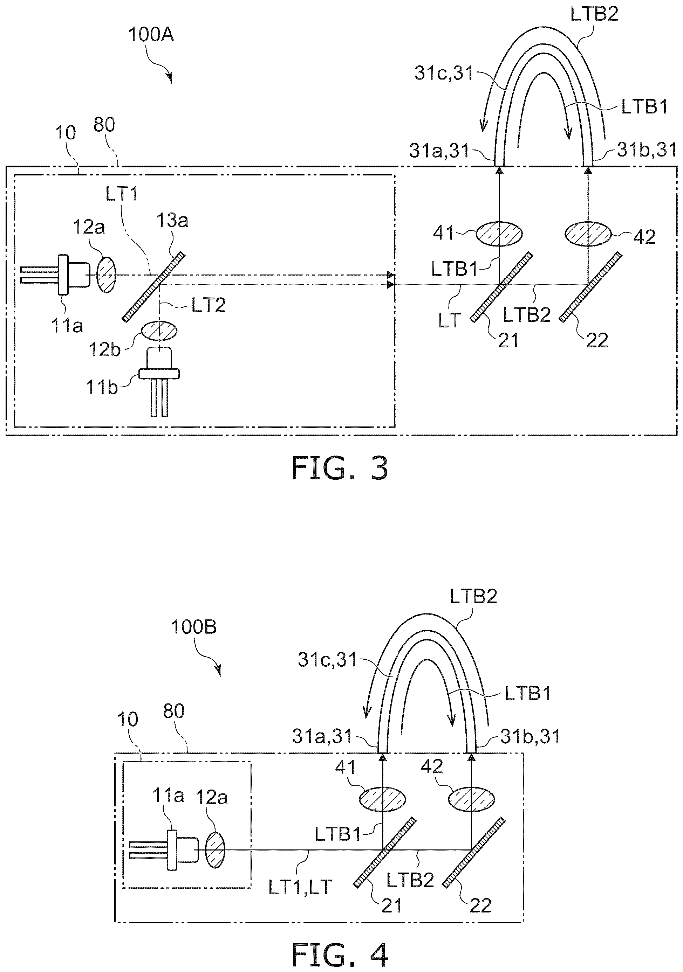

FIG. 3 is an explanatory drawing showing a light-emitting device according to a first modification of the first embodiment.

As shown in FIG. 3, the light-emitting device 100A according to the first modification of the first embodiment is substantially the same as the light-emitting device 100, except for the configuration of the light source 10.

In the light-emitting device 100A, the light source 10 includes the first light source part 11a, the second light source part 11b, the first collimating lens 12a, the second collimating lens 12b, and the first dichroic mirror 13a. In the light-emitting device 100A, the light source 10 does not include the third light source part 11c, the third collimating lens 12c, and the second dichroic mirror 13b.

In the light-emitting device 100A, the first laser light LT1 that is emitted from the first light source part 11a is collimated by the first collimating lens 12a and transmitted through the first dichroic mirror 13a. The second laser light LT2 that is emitted from the second light source part 11b is collimated by the second collimating lens 12b and reflected by the first dichroic mirror 13a. The collimated first laser light LT1 and the collimated second laser light LT2 are wavelength-combined by the first dichroic mirror 13a. As a result, the light source 10 irradiates the laser light LT in which the collimated first laser light LT1 and the collimated second laser light LT2 are combined. The splitting and incidence on the first diffusing fiber 31 of the laser light LT emitted from the light source 10 are substantially the same as those of the light-emitting device 100, and a description thereof is therefore omitted.

The light-emitting device 100A can have a lower cost than the light-emitting device 100 when one of the red laser light, the green laser light, or the blue laser light is unnecessary. The light-emitting device 100A is favorable when, for example, only turquoise light is to be emitted, in applications such as indicating automatic driving.

### Second modification of first embodiment

FIG. 4 is an explanatory drawing showing a light-emitting device according to a second modification of the first embodiment.

As shown in FIG. 4, the light-emitting device 100B according to the second modification of the first embodiment is substantially the same as the light-emitting device 100, except for the configuration of the light source 10.

In the light-emitting device 100B, the light source 10 includes the first light source part 11a and the first collimating lens 12a. In the light-emitting device 100B, the light source 10 does not include the second light source part 11b, the third light source part 11c, the second collimating lens 12b, the third collimating lens 12c, the first dichroic mirror 13a, and the second dichroic mirror 13b.

In the light-emitting device 100B, the first laser light LT1 (the laser light LT) emitted from the first light source part 11a is collimated by the first collimating lens 12a. As a result, the light source 10 emits the collimated first laser light LT1 (the laser light LT). The splitting and incidence on the first diffusing fiber 31 of the laser light LT emitted from the light source 10 are substantially the same as those of the light-emitting device 100, and a description thereof is therefore omitted.

The cost of the light-emitting device 100B can be lower than that of the light-emitting device 100 when used to emit monochromatic light. For example, the light-emitting device 100B is favorable when only red light is emitted in a tail lamp application, etc.

### Third modification of first embodiment

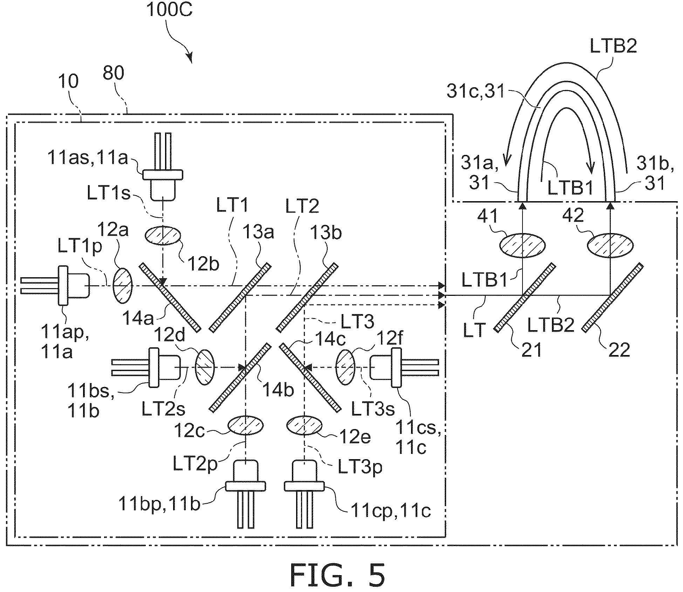

FIG. 5 is an explanatory drawing showing a light-emitting device according to a third modification of the first embodiment.

As shown in FIG. 5, the light-emitting device 100C according to the third modification of the first embodiment is substantially the same as the light-emitting device 100 except for the configuration of the light source 10.

In the light-emitting device 100C, the light source 10 includes the first light source part 11a, the second light source part 11b, the third light source part 11c, the first collimating lens 12a, the second collimating lens 12b, the third collimating lens 12c, a fourth collimating lens 12d, a fifth collimating lens 12e, a sixth collimating lens 12f, the first dichroic mirror 13a, the second dichroic mirror 13b, a first polarization-combining member 14a, a second polarization-combining member 14b, and a third polarization-combining member 14c. The first light source part 11a includes an S-polarized first light source part 11as and a P-polarized first light source part 11ap. The second light source part 11b includes an S-polarized second light source part 11bs and a P-polarized second light source part 11bp. The third light source part 11c includes an S-polarized third light source part 11cs and a P-polarized third light source part 11cp.

The S-polarized first light source part 11as emits an S-polarized first laser light LT1s. The P-polarized first light source part 11ap emits a P-polarized first laser light LT1p. When the first laser light LT1 is a blue laser light, the S-polarized first laser light LT1s is an S-polarized blue laser light, and the P-polarized first laser light LT1p is a P-polarized blue laser light.

The S-polarized second light source part 11bs emits an S-polarized second laser light LT2s. The P-polarized second light source part 11bp emits a P-polarized second laser light LT2p. When the second laser light LT2 is a green laser light, the S-polarized second laser light LT2s is an S-polarized green laser light, and the P-polarized second laser light LT2p is a P-polarized green laser light.

The S-polarized third light source part 11cs emits an S-polarized third laser light LT3s. The P-polarized third light source part 11cp emits a P-polarized third laser light LT3p. When the third laser light LT3 is a red laser light, the S-polarized third laser light LT3s is an S-polarized red laser light, and the P-polarized third laser light LT3p is a P-polarized red laser light.

The first collimating lens 12a collimates the P-polarized first laser light LT1p. The second collimating lens 12b collimates the S-polarized first laser light LT1s. The third collimating lens 12c collimates the P-polarized second laser light LT2p. The fourth collimating lens 12d collimates the S-polarized second laser light LT2s. The fifth collimating lens 12e collimates the P-polarized third laser light LT3p. The sixth collimating lens 12f collimates the S-polarized third laser light LT3s.

The first polarization-combining member 14a transmits the P-polarized first laser light LT1p and reflects the S-polarized first laser light LT1s. The second polarization-combining member 14b transmits the P-polarized second laser light LT2p and reflects the S-polarized second laser light LT2s. The third polarization-combining member 14c transmits the P-polarized third laser light LT3p and reflects the S-polarized third laser light LT3s.

In the light-emitting device 100C, the P-polarized first laser light LT1p that is emitted from the P-polarized first light source part 11ap is collimated by the first collimating lens 12a and transmitted through the first polarization-combining member 14a. The S-polarized first laser light LT1s that is emitted from the S-polarized first light source part 11as is collimated by the second collimating lens 12b and reflected by the first polarization-combining member 14a. The collimated S-polarized first laser light LT1s and the collimated P-polarized first laser light LT1p are polarization-combined by the first polarization-combining member 14a to become the first laser light LT1. The P-polarized second laser light LT2p that is emitted from the P-polarized second light source part 11bp is collimated by the third collimating lens 12c and transmitted through the second polarization-combining member 14b. The S-polarized second laser light LT2s that is emitted from the S-polarized second light source part 11bs is collimated by the fourth collimating lens 12d and reflected by the second polarization-combining member 14b. The collimated S-polarized second laser light LT2s and the collimated P-polarized second laser light LT2p are polarization-combined by the second polarization-combining member 14b to become the second laser light LT2. The P-polarized third laser light LT3p that is emitted from the P-polarized third light source part 11cp is collimated by the fifth collimating lens 12e and transmitted through the third polarization-combining member 14c. The S-polarized third laser light LT3s that is emitted from the S-polarized third light source part 11cs is collimated by the sixth collimating lens 12f and reflected by the third polarization-combining member 14c. The collimated S-polarized third laser light LT3s and the collimated P-polarized third laser light LT3p are polarization-combined by the third polarization-combining member 14c to become the third laser light LT3. The wavelength-combining of the first laser light LT1, the second laser light LT2, and the third laser light LT3 is substantially the same as that of the light-emitting device 100, and a description thereof is therefore omitted. The light source 10 emits the laser light LT formed by wavelength-combining of the first laser light LT1, in which the S-polarized first laser light LT1s and the P-polarized first laser light LT1p are polarization-combined, the second laser light LT2, in which the S-polarized second laser light LT2s and the P-polarized second laser light LT2p are polarization-combined, and the third laser light LT3, in which the S-polarized third laser light LT3s and the P-polarized third laser light LT3p are polarization-combined. When the first laser light LT1 is a blue laser light, the second laser light LT2 is a green laser light, and the third laser light LT3 is a red laser light, the light source 10 emits the laser light LT formed by wavelength-combining a red combined laser light, in which the S-polarized red laser light and the P-polarized red laser light are polarization-combined, a green combined laser light, in which the S-polarized green laser light and the P-polarized green laser light are polarization-combined, and a blue combined laser light, in which the S-polarized blue laser light and the P-polarized blue laser light are polarization-combined. The splitting and incidence on the first diffusing fiber 31 of the laser light LT emitted from the light source 10 are substantially the same as those of the light-emitting device 100, and a description thereof is therefore omitted.

Thus, in the light-emitting device 100C, because the light source 10 emits the laser light LT in which a red combined laser light formed by polarization combining, a green combined laser light formed by polarization combining, and a blue combined laser light formed by polarization combining are wavelength-combined, the laser light LT of various colors can be incident on the first diffusing fiber 31 by adjusting to the desired color while increasing the output of the laser light LT.

### Fourth modification of first embodiment

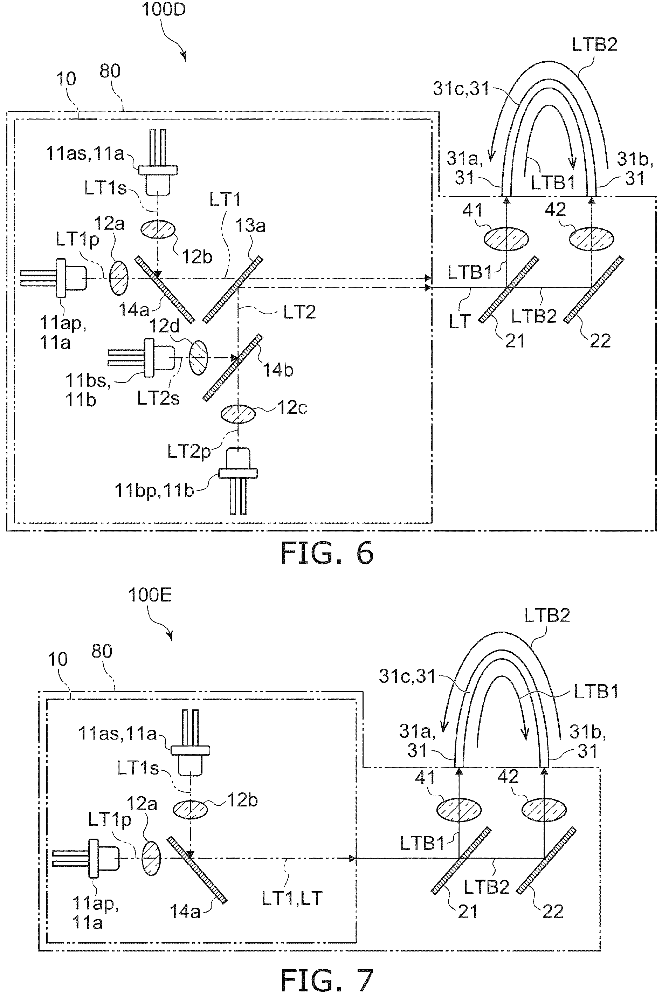

FIG. 6 is an explanatory drawing showing a light-emitting device according to a fourth modification of the first embodiment.

As shown in FIG. 6, the light-emitting device 100D according to the fourth modification of the first embodiment is substantially the same as the light-emitting device 100C, except for the configuration of the light source 10.

In the light-emitting device 100D, the light source 10 includes the first light source part 11a, the second light source part 11b, the first collimating lens 12a, the second collimating lens 12b, the third collimating lens 12c, the fourth collimating lens 12d, the first dichroic mirror 13a, the first polarization-combining member 14a, and the second polarization-combining member 14b. The first light source part 11a includes the S-polarized first light source part (the fourth light source part) 11as and the P-polarized first light source part (the fifth light source part) 11ap. The second light source part 11b includes the S-polarized second light source part (the sixth light source part) 11bs and the P-polarized second light source part (the seventh light source part) 11bp. In the light-emitting device 100D, the light source 10 does not include the third light source part 11c, the fifth collimating lens 12e, the sixth collimating lens 12f, the second dichroic mirror 13b, and the third polarization-combining member 14c.

In the light-emitting device 100D, the P-polarized first laser light LT1p that is emitted from the P-polarized first light source part 11ap is collimated by the first collimating lens 12a and transmitted through the first polarization-combining member 14a. The S-polarized first laser light LT1s that is emitted from the S-polarized first light source part 11as is collimated by the second collimating lens 12b and reflected by the first polarization-combining member 14a. The collimated S-polarized first laser light LT1s and the collimated P-polarized first laser light LT1p are polarization-combined by the first polarization-combining member 14a to become the first laser light LT1. In other words, the first light source part 11a emits the S-polarized first laser light LT1s and the P-polarized first laser light LT1p, which are to be polarization-combined. The P-polarized second laser light LT2p that is emitted from the P-polarized second light source part 11bp is collimated by the third collimating lens 12c and transmitted through the second polarization-combining member 14b. The S-polarized second laser light LT2s that is emitted from the S-polarized second light source part 11bs is collimated by the fourth collimating lens 12d and reflected by the second polarization-combining member 14b. The collimated S-polarized second laser light LT2s and the collimated P-polarized second laser light LT2p are polarization-combined by the second polarization-combining member 14b to become the second laser light LT2. In other words, the second light source part 11b emit the S-polarized second laser light LT2s and the P-polarized second laser light LT2p, which are to be polarization-combined. The wavelength-combining of the first and second laser lights LT1 and LT2 is substantially the same as that of the light-emitting device 100, and a description thereof is therefore omitted. The light source 10 emits the laser light LT in which the first laser light LT1, in which the S-polarized first laser light LT1s and the P-polarized first laser light LT1p are polarization-combined, and the second laser light LT2, in which the S-polarized second laser light LT2s and the P-polarized second laser light LT2p are polarization-combined, are wavelength-combined. The splitting and incidence on the first diffusing fiber 31 of the laser light LT emitted from the light source 10 are substantially the same as those of the light-emitting device 100, and a description thereof is therefore omitted.

In the light-emitting device 100D, effects similar to those of the light-emitting device 100A are obtained while increasing the output.

### Fifth modification of first embodiment

FIG. 7 is an explanatory drawing showing a light-emitting device according to a fifth modification of the first embodiment.

As shown in FIG. 7, the light-emitting device 100E according to the fifth modification of the first embodiment is substantially the same as the light-emitting device 100C, except for the configuration of the light source 10.

In the light-emitting device 100E, the light source 10 includes the first light source part 11a, the first collimating lens 12a, the second collimating lens 12b, and the first polarization-combining member 14a. The first light source part 11a includes the S-polarized first light source part 11as and the P-polarized first light source part 11ap. In the light-emitting device 100E, the light source 10 does not include the second light source part 11b, the third light source part 11c, the third collimating lens 12c, the fourth collimating lens 12d, the fifth collimating lens 12e, the sixth collimating lens 12f, the first dichroic mirror 13a, the second dichroic mirror 13b, the second polarization-combining member 14b, and the third polarization-combining member 14c.

In the light-emitting device 100E, the P-polarized first laser light LT1p that is emitted from the P-polarized first light source part 11ap is collimated by the first collimating lens 12a and transmitted through the first polarization-combining member 14a. The S-polarized first laser light LT1s that is emitted from the S-polarized first light source part 11as is collimated by the second collimating lens 12b and reflected by the first polarization-combining member 14a. The collimated S-polarized first laser light LT1s and the collimated P-polarized first laser light LT1p are polarization-combined by the first polarization-combining member 14a to become the first laser light LT1 (the laser light LT). The wavelength-combining of the first laser light LT1 (the laser light LT) is substantially the same as that of the light-emitting device 100, and a description thereof is therefore omitted. The light source 10 emits the first laser light LT1 (the laser light LT) formed by polarization combining of the S-polarized first laser light LT1s and the P-polarized first laser light LT1p. The splitting and incidence on the first diffusing fiber 31 of the laser light LT emitted from the light source 10 are substantially the same as those of the light-emitting device 100, and a description thereof is therefore omitted.

In the light-emitting device 100E, effects similar to those of the light-emitting device 100B are obtained while increasing the output.

### Sixth modification of first embodiment

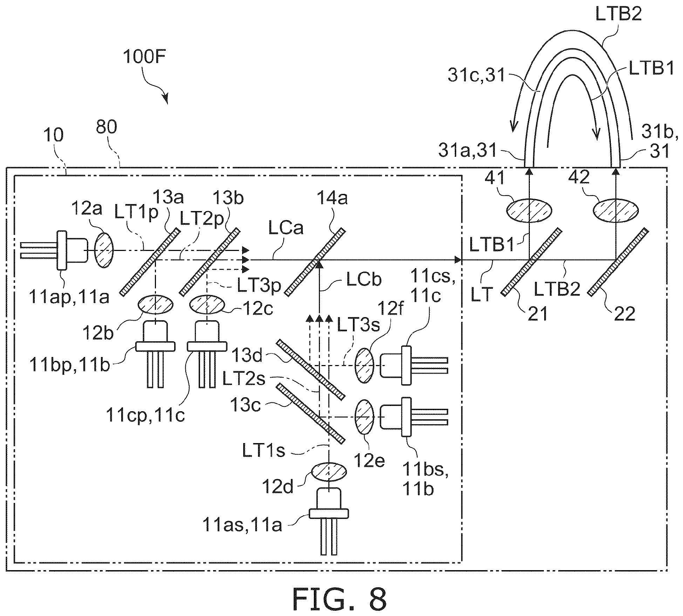

FIG. 8 is an explanatory drawing showing a light-emitting device according to a sixth modification of the first embodiment.

As shown in FIG. 8, the light-emitting device 100F according to the sixth modification of the first embodiment is substantially the same as the light-emitting device 100, except for the configuration of the light source 10.

In the light-emitting device 100F, the light source 10 includes the first light source part 11a, the second light source part 11b, the third light source part 11c, the first collimating lens 12a, the second collimating lens 12b, the third collimating lens 12c, the fourth collimating lens 12d, the fifth collimating lens 12e, the sixth collimating lens 12f, the first dichroic mirror 13a, the second dichroic mirror 13b, a third dichroic mirror 13c, a fourth dichroic mirror 13d, and the first polarization-combining member 14a. The first light source part 11a includes the S-polarized first light source part 11as and the P-polarized first light source part 11ap. The second light source part 11b includes the S-polarized second light source part 11bs and the P-polarized second light source part 11bp. The third light source part 11c includes the S-polarized third light source part 11cs and the P-polarized third light source part 11cp.

The first collimating lens 12a collimates the P-polarized first laser light LT1p. The second collimating lens 12b collimates the P-polarized second laser light LT2p. The third collimating lens 12c collimates the P-polarized third laser light LT3p. The fourth collimating lens 12d collimates the S-polarized first laser light LT1s. The fifth collimating lens 12e collimates the S-polarized second laser light LT2s. The sixth collimating lens 12f collimates the S-polarized third laser light LT3s.

The first dichroic mirror 13a transmits the P-polarized first laser light LT1p and reflects the P-polarized second laser light LT2p. The second dichroic mirror 13b transmits the P-polarized first laser light LT1p and the P-polarized second laser light LT2p and reflects the P-polarized third laser light LT3p. The third dichroic mirror 13c transmits the S-polarized first laser light LT1s and reflects the S-polarized second laser light LT2s. The second dichroic mirror 13b transmits the S-polarized first laser light LT1s and the S-polarized second laser light LT2s and reflects the S-polarized third laser light LT3s.

The first polarization-combining member 14a transmits the P-polarized first laser light LT1p, the P-polarized second laser light LT2p, and the P-polarized third laser light LT3p and reflects the S-polarized first laser light LT1s, the S-polarized second laser light LT2s, and the S-polarized third laser light LT3s.

In the light-emitting device 100F, the P-polarized first laser light LT1p that is emitted from the P-polarized first light source part 11ap is collimated by the first collimating lens 12a and transmitted through the first dichroic mirror 13a. The P-polarized second laser light LT2p that is emitted from the P-polarized second light source part 11bp is collimated by the second collimating lens 12b and reflected by the first dichroic mirror 13a. The collimated P-polarized first laser light LT1p and the collimated P-polarized second laser light LT2p are wavelength-combined by the first dichroic mirror 13a. The laser light in which the P-polarized first laser light LT1p and the P-polarized second laser light LT2p are combined is transmitted through the second dichroic mirror 13b. The P-polarized third laser light LT3p that is emitted from the P-polarized third light source part 11cp is collimated by the third collimating lens 12c and reflected by the second dichroic mirror 13b. The laser light in which the P-polarized first laser light LT1p and the P-polarized second laser light LT2p are combined and the collimated P-polarized third laser light LT3p are wavelength-combined by the second dichroic mirror 13b to become a first combined laser light LCa . The first combined laser light LCa is transmitted through the first polarization-combining member 14a. The S-polarized first laser light LT1s that is emitted from the S-polarized first light source part 11as is collimated by the fourth collimating lens 12d and transmitted through the third dichroic mirror 13c. The S-polarized second laser light LT2s that is emitted from the S-polarized second light source part 11bs is collimated by the fifth collimating lens 12e and reflected by the third dichroic mirror 13c. The collimated S-polarized first laser light LT1s and the collimated S-polarized second laser light LT2s are wavelength-combined at third dichroic mirror 13c. The laser light in which the S-polarized first laser light LT1s and the S-polarized second laser light LT2s are combined is transmitted through the fourth dichroic mirror 13d. The S-polarized third laser light LT3s that is emitted from the S-polarized third light source part 11cs is collimated by the sixth collimating lens 12f and reflected by the fourth dichroic mirror 13d. The laser light in which the S-polarized first laser light LT1s and the S-polarized second laser light LT2s are combined and the collimated S-polarized third laser light LT3s are wavelength-combined by the fourth dichroic mirror 13d to become a second combined laser light LCb. The second combined laser light LCb is reflected by the first polarization-combining member 14a. The first combined laser light LCa and the second combined laser light LCb are polarization-combined by the first polarization-combining member 14a. As a result, the light source 10 emits the laser light LT formed by polarization combining of the first combined laser light LCa, in which the P-polarized first laser light LT1p, the P-polarized second laser light LT2p, and the P-polarized third laser light LT3p are wavelength-combined, and the second combined laser light LCb, in which the S-polarized first laser light LT1s, the S-polarized second laser light LT2s, and the S-polarized third laser light LT3s are wavelength-combined. For example, when the S-polarized first laser light LT1s is an S-polarized blue laser light, the P-polarized first laser light LT1p is a P-polarized blue laser light, the S-polarized second laser light LT2s is an S-polarized green laser light, the P-polarized second laser light LT2p is a P-polarized green laser light, the S-polarized third laser light LT3s is an S-polarized red laser light, and the P-polarized third laser light LT3p is a P-polarized red laser light, the light source 10 emits the laser light LT formed by polarization combining of the first combined laser light LCa, in which the P-polarized red laser light, the P-polarized green laser light, and the P-polarized blue laser light are wavelength-combined, and the second combined laser light LCb, in which the S-polarized red laser light, the S-polarized green laser light, and the S-polarized blue laser light are wavelength-combined. The splitting and incidence on the first diffusing fiber 31 of the laser light LT emitted from the light source 10 are substantially the same as those of the light-emitting device 100, and a description thereof is therefore omitted.

Thus, in the light-emitting device 100F, because the light source 10 emits the laser light LT in which the first combined laser light LCa formed by wavelength-combining and the second combined laser light LCb formed by wavelength-combining are polarization-combined, the laser light LT of various colors can be incident on the first diffusing fiber 31 by adjusting to the desired color while increasing the output of the laser light LT.

### Seventh modification of first embodiment

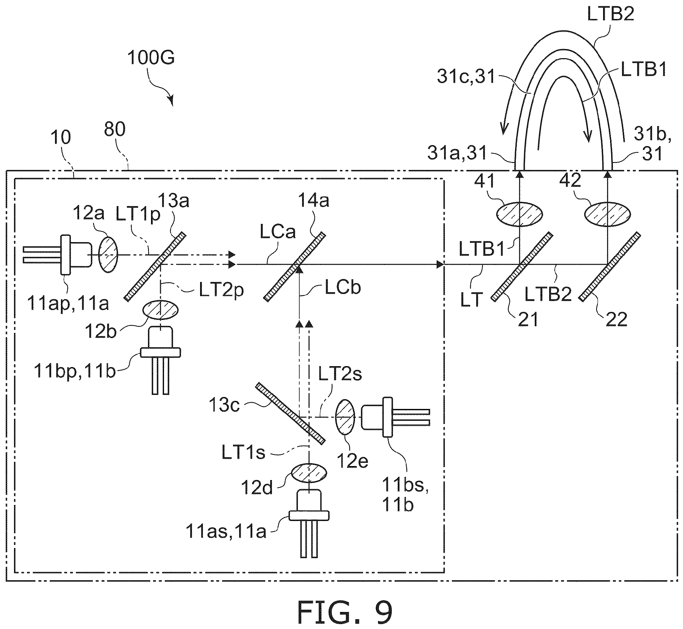

FIG. 9 is an explanatory drawing showing a light-emitting device according to a seventh modification of the first embodiment.

As shown in FIG. 9, the light-emitting device 100G according to the seventh modification of the first embodiment is substantially the same as the light-emitting device 100F, except for the configuration of the light source 10.

In the light-emitting device 100G, the light source 10 includes the first light source part 11a, the second light source part 11b, the first collimating lens 12a, the second collimating lens 12b, the fourth collimating lens 12d, the fifth collimating lens 12e, the first dichroic mirror 13a, the third dichroic mirror 13c, and the first polarization-combining member 14a. The first light source part 11a includes the S-polarized first light source part (the fourth light source part) 11as and the P-polarized first light source part (the fifth light source part) 11ap. The second light source part 11b includes the S-polarized second light source part (the sixth light source part) 11bs and the P-polarized second light source part (the seventh light source part) 11bp. In the light-emitting device 100G, the light source 10 does not include the third light source part 11c, the third collimating lens 12c, the sixth collimating lens 12f, the second dichroic mirror 13b, and the fourth dichroic mirror 13d.

In the light-emitting device 100G, the P-polarized first laser light LT1p that is emitted from the P-polarized first light source part 11ap is collimated by the first collimating lens 12a and transmitted through the first dichroic mirror 13a. The P-polarized second laser light LT2p that is emitted from the P-polarized second light source part 11bp is collimated by the second collimating lens 12b and reflected by the first dichroic mirror 13a. The collimated P-polarized first laser light LT1p and the collimated P-polarized second laser light LT2p are wavelength-combined by the first dichroic mirror 13a. The first combined laser light LCa is formed by the wavelength-combining of the P-polarized first laser light LT1p and the P-polarized second laser light LT2p. The first light source part 11a emits, toward the first polarization-combining member 14a, the first combined laser light LCa formed by wavelength-combining of the P-polarized first laser light LT1p and the P-polarized second laser light LT2p. The first combined laser light LCa is transmitted through the first polarization-combining member 14a. The S-polarized first laser light LT1s that is emitted from the S-polarized first light source part 11as is collimated by the fourth collimating lens 12d and transmitted through the third dichroic mirror 13c. The S-polarized second laser light LT2s that is emitted from the S-polarized second light source part 11bs is collimated by the fifth collimating lens 12e and reflected by the third dichroic mirror 13c. The collimated S-polarized first laser light LT1s and the collimated S-polarized second laser light LT2s are wavelength-combined by the third dichroic mirror 13c. The second combined laser light LCb is formed by wavelength-combining of the S-polarized first laser light LT1s and the S-polarized second laser light LT2s by the third dichroic mirror 13c. The second light source part 11b emits the S-polarized first laser light LT1s and the S-polarized second laser light LT2s, which are to be wavelength-combined to become the second combined laser light LCb, and the second combined laser light LCb is emitted toward the first polarization-combining member 14a. The second combined laser light LCb is reflected by the first polarization-combining member 14a. The first combined laser light LCa and the second combined laser light LCb are polarization-combined by the first polarization-combining member 14a. As a result, the light source 10 emits the laser light LT formed by polarization combining of the first combined laser light LCa, in which the P-polarized first laser light LT1p and the P-polarized second laser light LT2p are wavelength-combined, and the second combined laser light LCb, in which the S-polarized first laser light LT1s and the S-polarized second laser light LT2s are wavelength-combined. The splitting and incidence on the first diffusing fiber 31 of the laser light LT emitted from the light source 10 is substantially the same as the light-emitting device 100, and a description thereof is therefore omitted.

In the light-emitting device 100G, effects similar to those of the light-emitting device 100A are obtained while increasing the output.

### Second embodiment

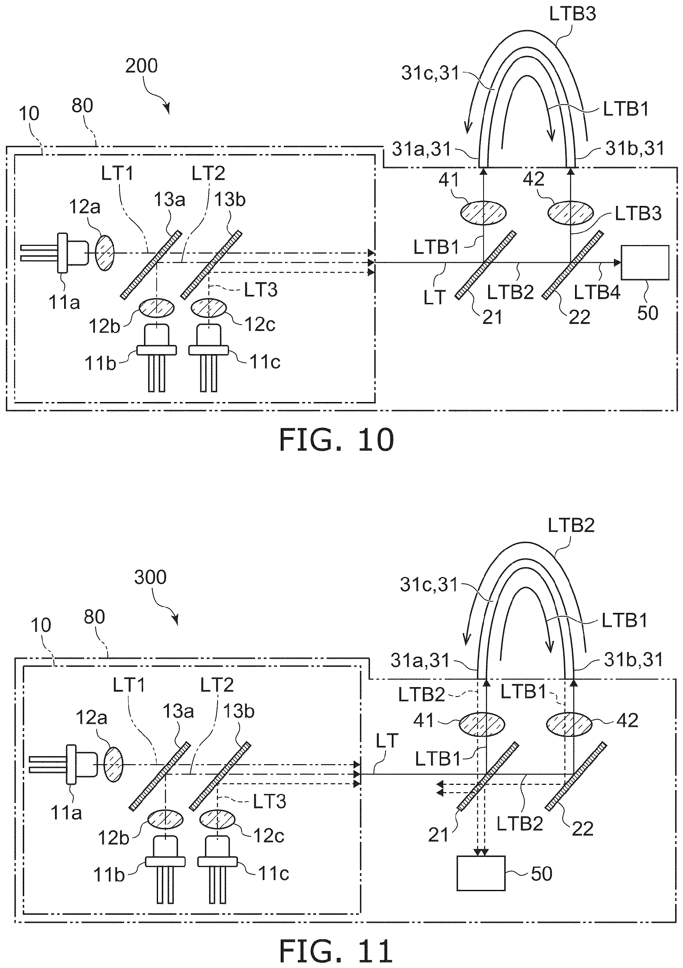

FIG. 10 is an explanatory drawing showing a light-emitting device according to a second embodiment.

As shown in FIG. 10, the light-emitting device 200 according to the second embodiment is substantially the same as the light-emitting device 100, except for the configuration of the second optical member 22 and inclusion of a light-receiving element 50.

In the light-emitting device 200, the second optical member 22 splits the second branched laser light LTB2 into a third branched laser light LTB3 and a fourth branched laser light LTB4. The second optical member 22 reflects the third branched laser light LTB3 and transmits the fourth branched laser light LTB4. In the light-emitting device 200, the second optical member 22 is, for example, a beam splitter.

The irradiation of the laser light LT from the light source 10 is substantially the same as the light-emitting device 100, and a description thereof is therefore omitted. In the light-emitting device 200, the first optical member 21 splits the laser light LT emitted from the light source 10 into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. For example, a portion of the first branched laser light LTB1 incident on the first end part 31a is emitted from the second end part 31b. The second optical member 22 splits the second branched laser light LTB2 into the third branched laser light LTB3 and the fourth branched laser light LTB4. The third branched laser light LTB3 is reflected by the second optical member 22, condensed by the second condensing lens 42, and incident on the second end part 31b of the first diffusing fiber 31. The third branched laser light LTB3 is the portion of the second branched laser light LTB2 reflected by the second optical member 22. The third branched laser light LTB3 incident on the second end part 31b passes through the first intermediate part 31c and travels toward the first end part 31a. For example, a portion of the third branched laser light LTB3 incident on the second end part 31b is emitted from the first end part 31a. The fourth branched laser light LTB4 is transmitted through the second optical member 22 and incident on the light-receiving element 50. The fourth branched laser light LTB4 is the portion of the second branched laser light LTB2 transmitted through the second optical member 22. The fourth branched laser light LTB4 is, for example, not more than 10% of the second branched laser light LTB2, and favorably not more than 5% of the second branched laser light LTB2.

### Light-receiving element

The light-receiving element 50 detects the presence or absence of the incidence of the fourth branched laser light LTB4 and/or the intensity of the fourth branched laser light LTB4 that is incident. The light-receiving element 50 is, for example, a photodiode or a phototransistor. As the light-receiving element 50 is preferably a light-receiving element configured to independently measure the output of each RGB color. By using such a light-receiving element 50, detailed adjustment in color is possible. The light-receiving element 50 outputs the detection result to a control device (not illustrated in the drawings). The control device controls the operation of the light source 10 based on the detection result. For example, the control device stops the emission of the laser light LT from the light source 10 when the fourth branched laser light LTB4 is not incident on the light-receiving element 50.

Thus, in the light-emitting device 200, the fourth branched laser light LTB4, which is a portion of the second branched laser light LTB2, is caused to be incident on the light-receiving element 50, which allows for detecting malfunctioning of the light-emitting device 200. The safety of the light-emitting device 200 can be improved by stopping the emission of the laser light LT from the light source 10 when the light-emitting device 200 malfunctions.

### Third embodiment

FIG. 11 is an explanatory drawing showing a light-emitting device according to a third embodiment.

As shown in FIG. 11, the light-emitting device 300 according to the third embodiment is substantially the same as the light-emitting device 100, except for inclusion of the light-receiving element 50.

The emission of the laser light LT from the light source 10 is substantially the same as the light-emitting device 100, and a description thereof is therefore omitted. In the light-emitting device 300, the first optical member 21 splits the laser light LT emitted from the light source 10 into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. A portion of the first branched laser light LTB1 incident on the first end part 31a is emitted from the second end part 31b. A portion of the first branched laser light LTB1 emitted from the second end part 31b is reflected toward the first optical member 21 by the second optical member 22 and then is reflected by the first optical member 21 to be incident on the light-receiving element 50. Not more than 10%, and preferably not more than 5% of the first branched laser light LTB1 emitted from the second end part 31b is reflected by the first optical member 21 and incident on the light-receiving element 50. The second branched laser light LTB2 is reflected by the second optical member 22, condensed by the second condensing lens 42, and incident on the second end part 31b of the first diffusing fiber 31. The second branched laser light LTB2 incident on the second end part 31b passes through the first intermediate part 31c and travels toward the first end part 31a. A portion of the second branched laser light LTB2 incident on the second end part 31b is emitted from the first end part 31a. A portion of the second branched laser light LTB2 emitted from the first end part 31a is transmitted through the first optical member 21 and incident on the light-receiving element 50. Not more than 10%, and preferably not more than 5% of the second branched laser light LTB2 emitted from the first end part 31a is transmitted through the first optical member 21 and incident on the light-receiving element 50.

### Light-receiving element

The light-receiving element 50 detects the presence or absence of the incidence of a portion of the first branched laser light LTB1 and a portion of the second branched laser light LTB2 and/or the intensity of the portion of the first branched laser light LTB1 and the portion of the second branched laser light LTB2 that are incident. The light-receiving element 50 is, for example, a photodiode or a phototransistor. The light-receiving element 50 outputs the detection result to a control device (not illustrated in drawings). The control device controls the operation of the light source 10 based on the detection result. For example, the control device stops the emission of the laser light LT from the light source 10 when a portion of the first branched laser light LTB1 and a portion of the second branched laser light LTB2 are not incident on the light-receiving element 50.

Thus, in the light-emitting device 300, a discrepancy of the light-emitting device 300 can be detected by causing a portion of the first branched laser light LTB1 and a portion of the second branched laser light LTB2 to be incident on the light-receiving element 50. The safety of the light-emitting device 300 can be improved by stopping the emission of the laser light LT from the light source 10 when the light-emitting device 300 malfunctions. In the light-emitting device 300, the output via the first diffusing fiber 31 can be monitored, and accordingly, for example, an abnormality can be detected when the first diffusing fiber 31 is damaged, for example.

### Fourth embodiment

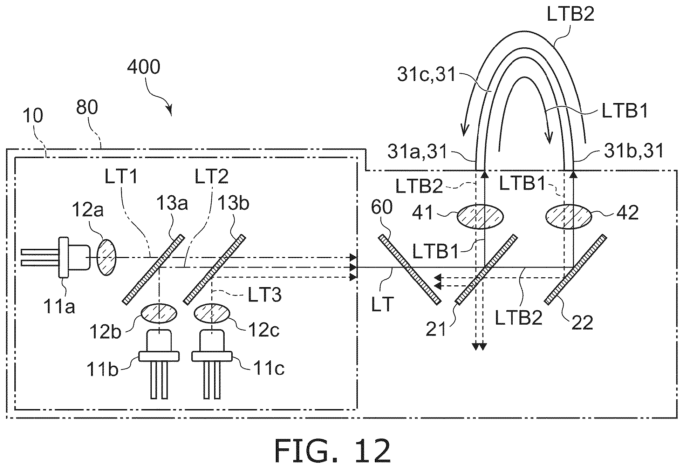

FIG. 12 is an explanatory drawing showing a light-emitting device according to a fourth embodiment.

As shown in FIG. 12, the light-emitting device 400 according to the fourth embodiment is substantially the same as the light-emitting device 100, except for inclusion of a polarizing member 60.

The emission of the laser light LT from the light source 10 is substantially the same as the light-emitting device 100, and a description thereof is therefore omitted. In the light-emitting device 400, for example, the light source 10 emits the laser light LT that is S-polarized. The first optical member 21 splits the laser light LT emitted from the light source 10 into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. A portion of the first branched laser light LTB1 incident on the first end part 31a is emitted from the second end part 31b. A portion of the first branched laser light LTB1 emitted from the second end part 31b is reflected by the second optical member 22, is transmitted through the first optical member 21, and travels toward the light source 10. The second branched laser light LTB2 is reflected by the second optical member 22, condensed by the second condensing lens 42, and incident on the second end part 31b of the first diffusing fiber 31. The second branched laser light LTB2 incident on the second end part 31b passes through the first intermediate part 31c and travels toward the first end part 31a. A portion of the second branched laser light LTB2 incident on the second end part 31b is emitted from the first end part 31a. A portion of the second branched laser light LTB2 emitted from the first end part 31a is reflected by the first optical member 21 and travels toward the light source 10. Thus, there are cases where a portion of the first branched laser light LTB1 and a portion of the second branched laser light LTB2 travel from the first optical member 21 toward the light source 10.

### Polarizing member

The polarizing member 60 is located between the light source 10 and the first optical member 21. For example, the polarizing member 60 transmits the S-polarized component and reflects the P-polarized component of a portion of the first branched laser light LTB1 and a portion of the second branched laser light LTB2. Accordingly, the P-polarized component of the portion of the first branched laser light LTB1 and the portion of the second branched laser light LTB2 traveling from the first optical member 21 toward the light source 10 can be shielded. The laser light LT that is emitted from the light source 10 is S-polarized light, and is therefore transmitted through the polarizing member 60.

Thus, in the light-emitting device 400, further inclusion of the polarizing member 60 located between the light source 10 and the first optical member 21 allows for inhibiting the occurrence of COD (Catastrophic Optical Damage) due to a portion of the first branched laser light LTB1 and a portion of the second branched laser light LTB2 reaching the light source 10.

The light source 10 may irradiate the laser light LT that is P-polarized. In such a case, the polarizing member 60 transmits the P-polarized component and reflects the S-polarized component of a portion of the first branched laser light LTB1 and a portion of the second branched laser light LTB2. The laser light LT emitted from the light source 10 is P-polarized light and is therefore transmitted through the polarizing member 60. The polarizing member 60 to transmit the same polarized component as the polarized component of the laser light LT emitted from the light source 10 and, to reflect the different polarized component.

### Fifth embodiment

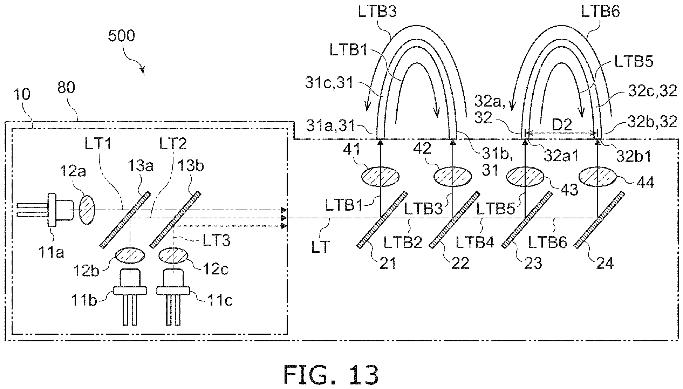

FIG. 13 is an explanatory drawing showing a light-emitting device according to a fifth embodiment.

As shown in FIG. 13, the light-emitting device 500 according to the fifth embodiment is substantially the same as the light-emitting device 100, except for the configuration of the second optical member 22 and inclusion of a third optical member 23, a fourth optical member 24, a second diffusing fiber 32, a third condensing lens 43, and a fourth condensing lens 44.

In the light-emitting device 500, the second optical member 22 splits the second branched laser light LTB2 into the third branched laser light LTB3 and the fourth branched laser light LTB4. The second optical member 22 reflects the third branched laser light LTB3 and transmits the fourth branched laser light LTB4. In the light-emitting device 500, the second optical member 22 is, for example, a beam splitter.

### Third optical member

The third optical member 23 splits the fourth branched laser light LTB4 into a fifth branched laser light LTB5 and a sixth branched laser light LTB6. The third optical member 23 reflects the fifth branched laser light LTB5 and transmits the sixth branched laser light LTB6. The third optical member 23 is, for example, a beam splitter.

### Fourth optical member

The fourth optical member 24 reflects at least a portion of the sixth branched laser light LTB6. In the light-emitting device 500, the fourth optical member 24 is a mirror that reflects the entirety of the sixth branched laser light LTB6.

### Second diffusing fiber

The second diffusing fiber 32 includes a third end part 32a, a fourth end part 32b, and a second intermediate part 32c. The third end part 32a is positioned at one end of the second diffusing fiber 32. The fourth end part 32b is positioned at the other end of the second diffusing fiber 32. The second intermediate part 32c is positioned between the third end part 32a and the fourth end part 32b. The fifth branched laser light LTB5 that is reflected by the third optical member 23 is incident on the third end part 32a. The sixth branched laser light LTB6 that is reflected by the fourth optical member 24 is incident on the fourth end part 32b.

The third end part 32a includes a third incident surface 32a1 on which the fifth branched laser light LTB5 is to be incident. The fourth end part 32b includes a fourth incident surface 32b1 on which the sixth branched laser light LTB6 is to be incident. In the light-emitting device 500, the third incident surface 32a1 and the fourth incident surface 32b1 are arranged to be oriented in the same direction. A distance D2 between the center of the third incident surface 32a1 and the center of the fourth incident surface 32b1 is, for example, not less than 1 mm and not more than 100 mm.

### Third and fourth condensing lenses

The third condensing lens 43 condenses the fifth branched laser light LTB5 and causes the fifth branched laser light LTB5 to be incident on the third end part 32a of the second diffusing fiber 32. The fourth condensing lens 44 condenses the sixth branched laser light LTB6 and causes the sixth branched laser light LTB6 to be incident on the fourth end part 32b of the second diffusing fiber 32.

The emission of the laser light LT from the light source 10 is substantially the same as that of the light-emitting device 100, and a description thereof is therefore omitted. In the light-emitting device 500, the first optical member 21 splits the laser light LT emitted from the light source 10 into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. For example, a portion of the first branched laser light LTB1 incident on the first end part 31a is emitted from the second end part 31b. The second optical member 22 splits the second branched laser light LTB2 into the third branched laser light LTB3 and the fourth branched laser light LTB4. The third branched laser light LTB3 is reflected by the second optical member 22, condensed by the second condensing lens 42, and incident on the second end part 31b of the first diffusing fiber 31. The third branched laser light LTB3 is the portion of the second branched laser light LTB2 reflected by the second optical member 22. The third branched laser light LTB3 incident on the second end part 31b passes through the first intermediate part 31c and travels toward the first end part 31a. For example, a portion of the third branched laser light LTB3 incident on the second end part 31b is emitted from the first end part 31a. The third optical member 23 splits the fourth branched laser light LTB4 into the fifth branched laser light LTB5 and the sixth branched laser light LTB6. The fifth branched laser light LTB5 is reflected by the third optical member 23, condensed by the third condensing lens 43, and incident on the third end part 32a of the second diffusing fiber 32. The fifth branched laser light LTB5 is the portion of the fourth branched laser light LTB4 reflected by the third optical member 23. The fifth branched laser light LTB5 incident on the third end part 32a passes through the second intermediate part 32c and travels toward the fourth end part 32b. For example, a portion of the fifth branched laser light LTB5 incident on the third end part 32a is emitted from the fourth end part 32b. The sixth branched laser light LTB6 is reflected by the fourth optical member 24, condensed by the fourth condensing lens 44, and incident on the fourth end part 32b of the second diffusing fiber 32. The sixth branched laser light LTB6 incident on the fourth end part 32b passes through the second intermediate part 32c and travels toward the third end part 32a. For example, a portion of the sixth branched laser light LTB6 incident on the fourth end part 32b is emitted from the third end part 32a.

Thus, in the light-emitting device 500, compared to when a laser light enters only one end of the first diffusing fiber 31 and one end of the second diffusing fiber 32, the first diffusing fiber 31 and the second diffusing fiber 32 can be illuminated more uniformly by splitting the laser light LT emitted from the light source 10 into the first branched laser light LTB1, the third branched laser light LTB3, the fifth branched laser light LTB5, and the sixth branched laser light LTB6, and by causing the first branched laser light LTB1, the third branched laser light LTB3, the fifth branched laser light LTB5, and the sixth branched laser light LTB6 to be respectively incident on the first and second end parts 31a and 31b of the first diffusing fiber 31 and on the third and fourth end parts 32a and 32b of the second diffusing fiber 32. The arrangement of the end parts of the first diffusing fiber 31 and the second diffusing fiber 32 may be modified to change the laser light incident on the end parts. For example, the third branched laser light LTB3 may be incident on the third end part 32a of the second diffusing fiber 32, and the fifth branched laser light LTB5 may be incident on the second end part 31b of the first diffusing fiber 31.

### Sixth embodiment

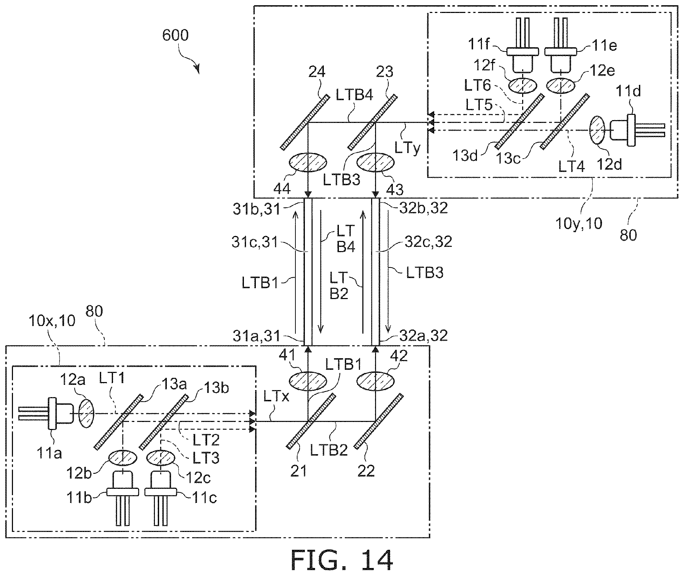

FIG. 14 is an explanatory drawing showing a light-emitting device according to a sixth embodiment.

As shown in FIG. 14, the light-emitting device 600 according to the sixth embodiment includes a first light source 10x, a second light source 10y, the first optical member 21, the second optical member 22, the third optical member 23, the fourth optical member 24, the first diffusing fiber 31, the second diffusing fiber 32, the first condensing lens 41, the second condensing lens 42, the third condensing lens 43, and the fourth condensing lens 44.

### First and second light sources

The first light source 10x irradiates a laser light LTx. The first light source 10x includes the first light source part 11a, the second light source part 11b, the third light source part 11c, the first collimating lens 12a, the second collimating lens 12b, the third collimating lens 12c, the first dichroic mirror 13a, and the second dichroic mirror 13b. The members included in the first light source 10x are substantially the same as the light source 10 described above, and a description thereof is therefore omitted.

The second light source 10y irradiates a laser light LTy. The second light source 10y includes a fourth light source part 11d, a fifth light source part 11e, a sixth light source part 11f, the fourth collimating lens 12d, the fifth collimating lens 12e, the sixth collimating lens 12f, the third dichroic mirror 13c, and the fourth dichroic mirror 13d.

The fourth light source part 11d emits a fourth laser light LT4. The fourth laser light LT4 has a fourth peak wavelength. The fourth laser light LT4 is, for example, a blue laser light. The fourth peak wavelength is, for example, not less than 400 nm but less than 500 nm. For example, the fourth peak wavelength may be equal to the first peak wavelength, or may be different from the first peak wavelength. It is favorable for the fourth peak wavelength to be different from the first peak wavelength. When the fourth peak wavelength is different from the first peak wavelength, the occurrence of COD can be reduced similarly to a light-emitting device 600B according to a second modification of the sixth embodiment below by employing a simple configuration in which the first dichroic mirror 13a and the second dichroic mirror 13b that transmit the first laser light LT1 and reflect the fourth laser light LT4 is used and the third dichroic mirror 13c and the fourth dichroic mirror 13d that transmit the fourth laser light LT4 and reflect the first laser light LT1 is used. The fourth laser light LT4 may be a green laser light or a red laser light.

The fifth light source part 11e emits a fifth laser light LT5. The fifth laser light LT5 has a fifth peak wavelength. The fifth peak wavelength is different from the fourth peak wavelength. The fifth laser light LT5 is, for example, a green laser light. The fifth peak wavelength is, for example, not less than 500 nm but less than 600 nm. For example, the fifth peak wavelength may be the same as the second peak wavelength, or may be different from the second peak wavelength. The fifth light source part 11e is, for example, a laser diode. It is favorable for the fifth peak wavelength to be different from the second peak wavelength. When the fifth peak wavelength is different from the second peak wavelength, the occurrence of COD can be reduced similarly to the light-emitting device 600B according to the second modification of the sixth embodiment below by employing a simple configuration in which the second dichroic mirror 13b that transmits the second laser light LT2 and reflects the fifth laser light LT5 is used and the fourth dichroic mirror 13d that transmits the fifth laser light LT5 and reflects the second laser light LT2 is used. The fifth laser light LT5 may be a blue laser light or a red laser light.

The sixth light source part 11f emits a sixth laser light LT6. The sixth laser light LT6 has a sixth peak wavelength. The sixth peak wavelength is different from the fourth peak wavelength and the fifth peak wavelength. The sixth laser light LT6 is, for example, a red laser light. The sixth peak wavelength is, for example, not less than 600 nm and not more than 700 nm. For example, the sixth peak wavelength may be the same as the third peak wavelength, or may be different from the third peak wavelength. The sixth light source part 11f is, for example, a laser diode. It is preferable that the sixth peak wavelength is different from the third peak wavelength. The sixth laser light LT6 may be a blue laser light or a green laser light.

The fourth collimating lens 12d collimates the fourth laser light LT4. The fifth collimating lens 12e collimates the fifth laser light LT5. The sixth collimating lens 12f collimates the sixth laser light LT6.

The third dichroic mirror 13c transmits the fourth laser light LT4 and reflects the fifth laser light LT5. The fourth dichroic mirror 13d transmits the fourth laser light LT4 and the fifth laser light LT5 and reflects the sixth laser light LT6.

### First to fourth optical members

The first optical member 21 splits the laser light LTx into the first branched laser light LTB1 and the second branched laser light LTB2. The first optical member 21 reflects the first branched laser light LTB1 and transmits the second branched laser light LTB2. The first optical member 21 is, for example, a beam splitter.

The second optical member 22 reflects at least a portion of the second branched laser light LTB2. In the light-emitting device 600, the second optical member 22 is a mirror that reflects all of the second branched laser light LTB2.

The third optical member 23 splits the laser light LTy into the third branched laser light LTB3 and the fourth branched laser light LTB4. The third optical member 23 reflects the third branched laser light LTB3 and transmits the fourth branched laser light LTB4. The third optical member 23 is, for example, a beam splitter.

The fourth optical member 24 reflects at least a portion of the fourth branched laser light LTB4. In the light-emitting device 600, the fourth optical member 24 is a mirror that reflects all of the fourth branched laser light LTB4.

### First and second diffusing fibers

The first diffusing fiber 31 includes the first end part 31a, the second end part 31b, and the first intermediate part 31c. The first end part 31a is positioned at one end of the first diffusing fiber 31 (the end part at the first light source 10x side). The second end part 31b is positioned at the other end of the first diffusing fiber 31 (the end part at the second light source 10y side). The first intermediate part 31c is positioned between the first end part 31a and the second end part 31b. The first branched laser light LTB1 that is reflected by the first optical member 21 is incident on the first end part 31a. The fourth branched laser light LTB4 that is reflected by the fourth optical member 24 is incident on the second end part 31b.

The second diffusing fiber 32 includes the third end part 32a, the fourth end part 32b, and the second intermediate part 32c. The third end part 32a is positioned at one end of the second diffusing fiber 32 (the end part at the first light source 10x side). The fourth end part 32b is positioned at the other end of the second diffusing fiber 32 (the end part at the second light source 10y side). The second intermediate part 32c is positioned between the third end part 32a and the fourth end part 32b. The second branched laser light LTB2 that is reflected by the second optical member 22 is incident on the third end part 32a. The third branched laser light LTB3 that is reflected by the third optical member 23 is incident on the fourth end part 32b.

### First to fourth condensing lenses

The first condensing lens 41 condenses the first branched laser light LTB1 and causes the first branched laser light LTB1 to be incident on the first end part 31a of the first diffusing fiber 31. The second condensing lens 42 condenses the second branched laser light LTB2 and causes the second branched laser light LTB2 to be incident on the third end part 32a of the second diffusing fiber 32. The third condensing lens 43 condenses the third branched laser light LTB3 and causes the third branched laser light LTB3 to be incident on the fourth end part 32b of the second diffusing fiber 32. The fourth condensing lens 44 condenses the fourth branched laser light LTB4 and causes the fourth branched laser light LTB4 to be incident on the second end part 31b of the first diffusing fiber 31.

The first light source 10x emits the laser light LTx in which the first laser light LT1, the second laser light LT2, and the third laser light LT3 are combined. The emission of the laser light LTx from the first light source 10x is substantially the same as the emission of the laser light LT from the light source 10 described above, and a description thereof is therefore omitted. In the light-emitting device 600, the fourth laser light LT4 that is emitted from the fourth light source part 11d is collimated by the fourth collimating lens 12d and transmitted through the third dichroic mirror 13c. The fifth laser light LT5 that is emitted from the fifth light source part 11e is collimated by the fifth collimating lens 12e and reflected by the third dichroic mirror 13c. The collimated fourth laser light LT4 and the collimated fifth laser light LT5 are wavelength-combined by the third dichroic mirror 13c. The fourth dichroic mirror 13d transmits the laser light in which the fourth laser light LT4 and the fifth laser light LT5 are combined. The sixth laser light LT6 that is emitted from the sixth light source part 11f is collimated by the sixth collimating lens 12f and reflected by the fourth dichroic mirror 13d. The fourth dichroic mirror 13d wavelength-combines the collimated sixth laser light LT6 and the laser light in which the fourth laser light LT4 and the fifth laser light LT5 are combined. Accordingly, the second light source 10y emits the laser light LTy in which the fourth laser light LT4, the fifth laser light LT5, and the sixth laser light LT6 are combined. For example, when the fourth laser light LT4 is a blue laser light, the fifth laser light LT5 is a green laser light, and the sixth laser light LT6 is a red laser light, the second light source 10y emits the laser light LTy formed by wavelength-combining of the red laser light, the green laser light, and the blue laser light.

The first optical member 21 splits the laser light LTx emitted from the first light source 10x into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. For example, a portion of the first branched laser light LTB1 incident on the first end part 31a is emitted from the second end part 31b. The second branched laser light LTB2 is reflected by the second optical member 22, condensed by the second condensing lens 42, and incident on the third end part 32a of the second diffusing fiber 32. The second branched laser light LTB2 incident on the third end part 32a passes through the second intermediate part 32c and travels toward the fourth end part 32b. For example, a portion of the second branched laser light LTB2 incident on the third end part 32a is emitted from the fourth end part 32b. The third optical member 23 splits the laser light LTy emitted from the second light source 10y into the third branched laser light LTB3 and the fourth branched laser light LTB4. The third branched laser light LTB3 is condensed by the third condensing lens 43 and incident on the fourth end part 32b of the second diffusing fiber 32. The third branched laser light LTB3 incident on the fourth end part 32b passes through the second intermediate part 32c and travels toward the third end part 32a. For example, a portion of the third branched laser light LTB3 incident on the fourth end part 32b is emitted from the third end part 32a. The fourth branched laser light LTB4 is reflected by the fourth optical member 24, condensed by the fourth condensing lens 44, and incident on the second end part 31b of the first diffusing fiber 31. The fourth branched laser light LTB4 incident on the second end part 31b passes through the first intermediate part 31c and travels toward the first end part 31a. For example, a portion of the fourth branched laser light LTB4 incident on the second end part 31b is emitted from the first end part 31a.

Thus, in the light-emitting device 600, laser light of different colors can be incident on respective two ends of the first diffusing fiber 31 and the second diffusing fiber 32 by splitting the laser light LTx emitted from the first light source 10x into the first branched laser light LTB1 and the second branched laser light LTB2 and causing the first branched laser light LTB1 and the second branched laser light LTB2 to be respectively incident on the first end part 31a of the first diffusing fiber 31 and the third end part 32a of the second diffusing fiber 32, and by splitting the laser light LTy emitted from the second light source 10y into the third branched laser light LTB3 and the fourth branched laser light LTB4 and by causing the third branched laser light LTB3 and the fourth branched laser light LTB4 to be respectively incident on the fourth end part 32b of the second diffusing fiber 32 and the second end part 31b of the first diffusing fiber 31. Accordingly, the first diffusing fiber 31 and the second diffusing fiber 32 can be illuminated with a gradation.

### First modification of sixth embodiment

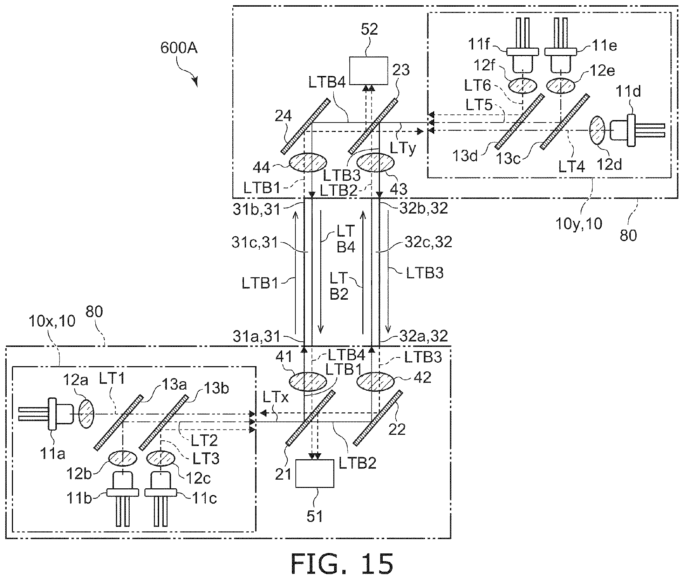

FIG. 15 is an explanatory drawing showing a light-emitting device according to a first modification of the sixth embodiment.

As shown in FIG. 15, the light-emitting device 600A according to the first modification of the sixth embodiment is substantially the same as the light-emitting device 600, except for inclusion of a first light-receiving element 51 and a second light-receiving element 52.

The irradiation of the laser light LTx from the first light source 10x and the irradiation of the laser light LTy from the second light source 10y are substantially the same as the light-emitting device 600, and a description thereof is therefore omitted. In the light-emitting device 600A, the first optical member 21 splits the laser light LTx emitted from the first light source 10x into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. A portion of the first branched laser light LTB1 incident on the first end part 31a is emitted from the second end part 31b. A portion of the first branched laser light LTB1 emitted from the second end part 31b is reflected toward the third optical member 23 by the fourth optical member 24, and then is reflected by the third optical member 23 to be incident on the second light-receiving element 52. The second branched laser light LTB2 is reflected by the second optical member 22, condensed by the second condensing lens 42, and incident on the third end part 32a of the second diffusing fiber 32. The second branched laser light LTB2 incident on the third end part 32a passes through the second intermediate part 32c and travels toward the fourth end part 32b. A portion of the second branched laser light LTB2 incident on the third end part 32a is emitted from the fourth end part 32b. A portion of the second branched laser light LTB2 emitted from the fourth end part 32b is transmitted through the third optical member 23 and incident on the second light-receiving element 52. The third optical member 23 splits the laser light LTy emitted from the second light source 10y into the third branched laser light LTB3 and the fourth branched laser light LTB4. The third branched laser light LTB3 is condensed by the third condensing lens 43 and incident on the fourth end part 32b of the second diffusing fiber 32. The third branched laser light LTB3 incident on the fourth end part 32b passes through the second intermediate part 32c and travels toward the third end part 32a. A portion of the third branched laser light LTB3 incident on the fourth end part 32b is emitted from the third end part 32a. A portion of the third branched laser light LTB3 emitted from the third end part 32a is reflected toward the first optical member 21 by the second optical member 22, and is then reflected by the first optical member 21 to be incident on the first light-receiving element 51. The fourth branched laser light LTB4 is reflected by the fourth optical member 24, condensed by the fourth condensing lens 44, and incident on the second end part 31b of the first diffusing fiber 31. The fourth branched laser light LTB4 incident on the second end part 31b passes through the first intermediate part 31c and travels toward the first end part 31a. A portion of the fourth branched laser light LTB4 incident on the second end part 31b is emitted from the first end part 31a. A portion of the fourth branched laser light LTB4 emitted from the first end part 31a is transmitted through the first optical member 21 and is incident on the first light-receiving element 51.

### First and second light-receiving elements

The first light-receiving element 51 detects whether each of a portion of the third branched laser light LTB3 and a portion of the fourth branched laser light LTB4 is incident, and/or the intensity of the portion of the third branched laser light LTB3 and the portion of the fourth branched laser light LTB4 that are incident. The second light-receiving element 52 detects whether each of a portion of the first branched laser light LTB1 and a portion of the second branched laser light LTB2 is incident, and/or the intensity of the portion of the first branched laser light LTB1 and the portion of the second branched laser light LTB2 that are incident. The first light-receiving element 51 and the second light-receiving element 52 are, for example, photodiodes or phototransistors. The first light-receiving element 51 and the second light-receiving element 52 output the detection results to a control device (not illustrated). The control device controls the operations of the first and second light sources 10x and 10y based on the detection results. For example, the control device stops the emission of the laser light LTx from the first light source 10x when a portion of the first branched laser light LTB1 and a portion of the second branched laser light LTB2 are not incident on the second light-receiving element 52. For example, the control device stops the emission of the laser light LTy from the second light source 10y when a portion of the third branched laser light LTB3 and a portion of the fourth branched laser light LTB4 are not incident on the first light-receiving element 51. For example, when the detection result of one of the first light-receiving element 51 or the second light-receiving element 52 changes, the control device stops the emission of the laser light LTx and LTy because laser light may be leaking due to breakage of a diffusing fiber.

Thus, in the light-emitting device 600A, a malfunction of the light-emitting device 600A can be detected by causing a portion of the first branched laser light LTB1 and a portion of the second branched laser light LTB2 to be incident on the second light-receiving element 52, and by causing a portion of the third branched laser light LTB3 and a portion of the fourth branched laser light LTB4 to be incident on the first light-receiving element 51. When there is a malfunction in the light-emitting device 600A, the safety of the light-emitting device 600A can be improved by stopping the emission of the laser light LTx from the first light source 10x and/or the emission of the laser light LTy from the second light source 10y.

### Second modification of sixth embodiment

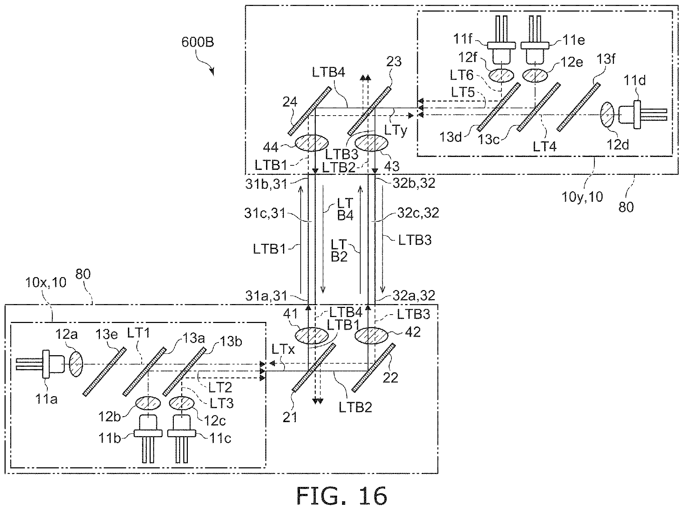

FIG. 16 is an explanatory drawing showing a light-emitting device according to a second modification of the sixth embodiment.

As shown in FIG. 16, the light-emitting device 600B according to the second modification of the sixth embodiment is substantially the same as the light-emitting device 600, except for the configuration of the first and second light sources 10x and 10y.

In the light-emitting device 600B, the first peak wavelength of the first laser light LT1 emitted from the first light source part 11a of the first light source 10x is different from the fourth peak wavelength of the fourth laser light LT4 emitted from the fourth light source part 11d of the second light source 10y. The first light source 10x further includes a fifth dichroic mirror 13e. The fifth dichroic mirror 13e transmits the first laser light LT1 of the first peak wavelength and reflects the fourth laser light LT4 of the fourth peak wavelength. The second light source 10y further includes a sixth dichroic mirror 13f. The sixth dichroic mirror 13f transmits the fourth laser light LT4 of the fourth peak wavelength and reflects the first laser light LT1 of the first peak wavelength.

The irradiation of the laser light LTx from the first light source 10x and the irradiation of the laser light LTy from the second light source 10y are substantially the same as those of the light-emitting device 600, and a description thereof is therefore omitted. In the light-emitting device 600B, the first laser light LT1 that is emitted from the first light source part 11a of the first light source 10x is transmitted through the fifth dichroic mirror 13e before being transmitted through the first dichroic mirror 13a. In the light-emitting device 600B, the fourth laser light LT4 that is emitted from the fourth light source part 11d of the second light source 10y is transmitted through the sixth dichroic mirror 13f before being transmitted through the third dichroic mirror 13c.

The first optical member 21 splits the laser light LTx emitted from the first light source 10x into the first branched laser light LTB1 and the second branched laser light LTB2. The first branched laser light LTB1 is condensed by the first condensing lens 41 and incident on the first end part 31a of the first diffusing fiber 31. The first branched laser light LTB1 incident on the first end part 31a passes through the first intermediate part 31c and travels toward the second end part 31b. A portion of the first branched laser light LTB1 incident on the first end part 31a is emitted from the second end part 31b. A portion of the first branched laser light LTB1 emitted from the second end part 31b is reflected by the fourth optical member 24 and travels toward the second light source 10y by being transmitted through the third optical member 23. The second branched laser light LTB2 is reflected by the second optical member 22, condensed by the second condensing lens 42, and incident on the third end part 32a of the second diffusing fiber 32. The second branched laser light LTB2 incident on the third end part 32a passes through the second intermediate part 32c and travels toward the fourth end part 32b. A portion of the second branched laser light LTB2 incident on the third end part 32a is emitted from the fourth end part 32b. A portion of the second branched laser light LTB2 emitted from the fourth end part 32b travels toward the second light source 10y by being reflected by the third optical member 23. The third optical member 23 splits the laser light LTy emitted from the second light source 10y into the third branched laser light LTB3 and the fourth branched laser light LTB4. The third branched laser light LTB3 is condensed by the third condensing lens 43 and incident on the fourth end part 32b of the second diffusing fiber 32. The third branched laser light LTB3 incident on the fourth end part 32b passes through the second intermediate part 32c and travels toward the third end part 32a. A portion of the third branched laser light LTB3 incident on the fourth end part 32b is emitted from the third end part 32a. A portion of the third branched laser light LTB3 emitted from the third end part 32a is reflected by the second optical member 22 and travels toward the first light source 10x by being transmitted through the first optical member 21. The fourth branched laser light LTB4 is reflected by the fourth optical member 24, condensed by the fourth condensing lens 44, and incident on the second end part 31b of the first diffusing fiber 31. The fourth branched laser light LTB4 incident on the second end part 31b passes through the first intermediate part 31c and travels toward the first end part 31a. A portion of the fourth branched laser light LTB4 incident on the second end part 31b is emitted from the first end part 31a. A portion of the fourth branched laser light LTB4 emitted from the first end part 31a travels toward the first light source 10x by being reflected by the first optical member 21. Thus, there are cases in which a portion of the first branched laser light LTB1 and a portion of the second branched laser light LTB2 may travel from the third optical member 23 toward the second light source 10y. There are also cases in which a portion of the third branched laser light LTB3 and a portion of the fourth branched laser light LTB4 travel from the first optical member 21 toward the first light source 10x.

The fifth dichroic mirror 13e is located between the first light source part 11a and the first optical member 21. More specifically, the fifth dichroic mirror 13e is located between the first light source part 11a and the first dichroic mirror 13a. As described above, the fifth dichroic mirror 13e transmits the first laser light LT1 of the first peak wavelength and reflects the fourth laser light LT4 of the fourth peak wavelength. As a result, the component of the fourth laser light LT4 of the fourth peak wavelength among the portion of the third branched laser light LTB3 and the portion of the fourth branched laser light LTB4 traveling from the first optical member 21 toward the first light source part 11a can be shielded. The fifth dichroic mirror 13e transmits the first laser light LT1 of the first peak wavelength irradiated from the first light source part 11a.

The sixth dichroic mirror 13f is located between the fourth light source part 11d and the third optical member 23. More specifically, the sixth dichroic mirror 13f is located between the fourth light source part 11d and the third dichroic mirror 13c. As described above, the sixth dichroic mirror 13f transmits the fourth laser light LT4 of the fourth peak wavelength and reflects the first laser light LT1 of the first peak wavelength. As a result, the component of the first laser light LT1 of the first peak wavelength among the portion of the first branched laser light LTB1 and the portion of the second branched laser light LTB2 traveling from the third optical member 23 toward the fourth light source part 11d can be shielded. The sixth dichroic mirror 13f transmits the fourth laser light LT4 of the fourth peak wavelength irradiated from the fourth light source part 11d.

Thus, in the light-emitting device 600B, further inclusion of the fifth dichroic mirror 13e located between the first light source part 11a and the first optical member 21 allows for inhibiting the occurrence of COD caused by to a portion of the third branched laser light LTB3 and a portion of the fourth branched laser light LTB4 reaching the first light source 10x. Also, further inclusion of the sixth dichroic mirror 13f located between the fourth light source part 11d and the third optical member 23 allows for inhibiting the occurrence of COD caused by a portion of the first branched laser light LTB1 and a portion of the second branched laser light LTB2 reaching the second light source 10y. In particular, when the first laser light LT1 and the fourth laser light LT4 are red laser lights, COD is likely to occur, and thus the effect is greater.

The first light source 10x may further include a seventh dichroic mirror that transmits the second laser light LT2 and reflects the fifth laser light LT5. For example, the seventh dichroic mirror is located between the second light source part 11b and the first optical member 21. More specifically, for example, the seventh dichroic mirror is located between the second light source part 11b and the first dichroic mirror 13a.

The second light source 10y may further include an eighth dichroic mirror that transmits the fifth laser light LT5 and reflects the second laser light LT2. For example, the eighth dichroic mirror is located between the fifth light source part 11e and the third optical member 23. More specifically, for example, the eighth dichroic mirror is located between the fifth light source part 11e and the third dichroic mirror 13c.

The first light source 10x may further include a ninth dichroic mirror that transmits the third laser light LT3 and reflects the sixth laser light LT6. For example, the ninth dichroic mirror is located between the third light source part 11c and the first optical member 21. More specifically, for example, the ninth dichroic mirror is located between the third light source part 11c and the second dichroic mirror 13b.

The second light source 10y may further include a tenth dichroic mirror that transmits the sixth laser light LT6 and reflects the third laser light LT3. For example, the tenth dichroic mirror is located between the sixth light source part 11f and the third optical member 23. More specifically, for example, the tenth dichroic mirror is located between the sixth light source part 11f and the fourth dichroic mirror 13d.

### Vehicle

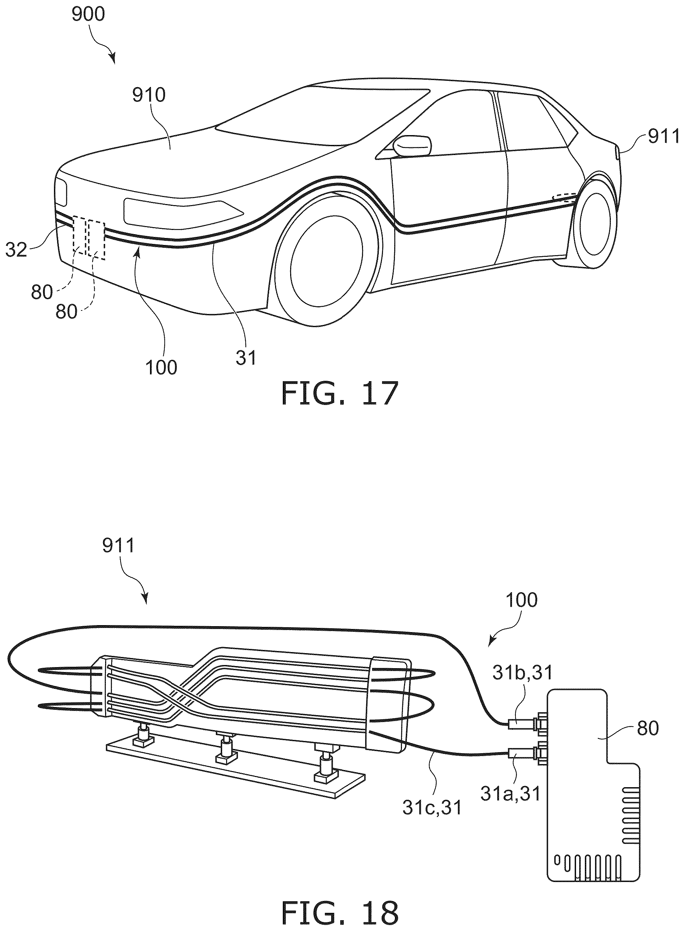

FIG. 17 is a perspective view showing a vehicle including a light-emitting device according to an embodiment.

FIG. 18 is an explanatory drawing showing a tail lamp including the light-emitting device according to the embodiment.

As shown in FIG. 17, the vehicle 900 according to the embodiment includes a vehicle body 910 and the light-emitting device 100.

The light-emitting device 100 is mounted to the vehicle body 910. In the vehicle 900, the housing 80 of the light-emitting device 100 is located at the front part of the vehicle body 910. The first diffusing fiber 31 and the second diffusing fiber 32 of the light-emitting device 100 are arranged from the housing 80 along the front surface and the side surfaces of the vehicle body 910.

As shown in FIG. 18, the light-emitting device 100 may be mounted to a tail lamp 911 positioned at the back part of the vehicle body 910. One first diffusing fiber 31 is located in the tail lamp 911.

Thus, the designability of the vehicle 900 can be improved by mounting the light-emitting device 100 in the vehicle body 910 and/or the tail lamp 911.

The diffusing fiber may be used in applications according to UN R48, 5.15 by being illuminated in the colors specified in UN R48 (Regulation No. 48 of the Economic Commission for Europe of the United Nations), 2.29 to 2.32. The diffusing fiber also may be used as a marker lamp of an ADS (Automated Driving System) by being illuminated in the colors specified in SAE J3134 201905, 6.2.1.

According to the embodiments above, the laser light that is transmitted and the laser light that is reflected by the dichroic mirrors, the optical members, the polarization-combining members, the polarizing members, etc., may be reversed from each other.
The present invention includes the following aspects.

### (aspect 1)

A light-emitting device comprising:
a light source configured to emit a laser light;
a first optical member configured to split the laser light into first branched laser light and second branched laser light by reflecting the first branched laser light and transmitting the second branched laser light; and
a first diffusing fiber comprising:
   a first end part on which at least a portion of the first branched laser light reflected by the first optical member is incident, and
   a second end part on which at least a portion of the second branched laser light is incident.

### (aspect 2)

The light-emitting device according to claim 1, further comprising:
a second optical member configured to reflect at least a portion of the second branched laser light; wherein:
the second branched laser light reflected by the second optical member is incident on the second end part.

### (aspect 3)

The light-emitting device according to claim 1 or 2, wherein:
the light source comprises a first light source part and a second light source part; and
in the laser light emitted from the light source, a first laser light emitted from the first light source part and a second laser light emitted from the second light source part are combined.

### (aspect 4)

The light-emitting device according to claim 3, wherein:
the first laser light has a first peak wavelength; and
the second laser light has a second peak wavelength different from the first peak wavelength.

### (aspect 5)

The light-emitting device according to claim 4, wherein:
the light source further comprises a third light source part configured to emit a third laser light having a third peak wavelength different from the first and second peak wavelengths;
the first laser light is a blue laser light;
the second laser light is a green laser light;
the third laser light is a red laser light; and
in the laser light emitted from the light source, the red laser light, the green laser light, and the blue laser light are wavelength-combined.

### (aspect 6)

The light-emitting device according to any one of claim 2 to 5, further comprising:
a light-receiving element; wherein:
the second optical member is configured to split the second branched laser light into a third branched laser light and a fourth branched laser light by reflecting the third branched laser light and transmitting the fourth branched laser light;
the fourth branched laser light is incident on the light-receiving element.

### (aspect 7)

The light-emitting device according to any one of claim 2 to 5, further comprising:
a light-receiving element; wherein:
a portion of the first branched laser light is incident on the first end part, is emitted from the second end part, is reflected by the second optical member, is reflected by the first optical member, and then is incident on the light-receiving element;
a portion of the second branched laser light is incident on the second end part, is emitted from the first end part, is transmitted through the first optical member, and then is incident on the light-receiving element.

### (aspect 8)

The light-emitting device according to any one of claim 1 to 7, further comprising:
a polarizing member located between the light source and the first optical member.

### (aspect 9)

The light-emitting device according to any one of claim 2 to 8, wherein:
the second optical member is configured to split the second branched laser light into a third branched laser light and a fourth branched laser light by reflecting the third branched laser light and transmitting the fourth branched laser light; and
the light-emitting device further comprises:
   a third optical member configured to split the fourth branched laser light into a fifth branched laser light and a sixth branched laser light by reflecting the fifth branched laser light and transmitting the sixth branched laser light,
   a fourth optical member configured to reflect at least a portion of the sixth branched laser light, and
   a second diffusing fiber comprising:
      a third end part on which the fifth branched laser light reflected by the third optical member is incident, and
      a fourth end part on which the sixth branched laser light reflected by the fourth optical member is incident.

### (aspect 10)

The light-emitting device according to claim 5, wherein:
the first light source part comprises:
   an S-polarized first light source part configured to emit an S-polarized blue laser light, and
   a P-polarized first light source part configured to emit a P-polarized blue laser light;
the second light source part comprises:
   an S-polarized second light source part configured to emit an S-polarized green laser light, and
   a P-polarized second light source part configured to emit a P-polarized green laser light;
the third light source part comprises:
   an S-polarized third light source part configured to emit an S-polarized red laser light, and
   a P-polarized third light source part configured to emit a P-polarized red laser light;
in the laser light emitted from the light source, a red combined laser light, a green combined laser light, and a blue combined laser light are wavelength-combined;
in the red combined laser light, the S-polarized red laser light and the P-polarized red laser light are polarization-combined;
in the green combined laser light, the S-polarized green laser light and the P-polarized green laser light are polarization-combined; and
in the blue combined laser light, the S-polarized blue laser light and the P-polarized blue laser light are polarization-combined.

### (aspect 11)

The light-emitting device according to claim 3, wherein:
the light source further comprises a first polarization-combining member and a second polarization-combining member;
the first light source part comprises a fourth light source part and a fifth light source part;
the first light source part is configured such that a laser light emitted from the fourth light source part and a laser light emitted from the fifth light source part are polarization-combined by the first polarization-combining member;
the second light source part comprises a sixth light source part and a seventh light source part;
the second light source part is configured such that a laser light emitted from the sixth light source part and a laser light emitted from the seventh light source part are polarization-combined by the second polarization-combining member; and
in the laser light emitted from the light source, the laser light emitted from the first light source part and polarization-combined by the first polarization-combining member and the laser light emitted from the second light source part and polarization-combined by the second polarization-combining member are wavelength-combined.

### (aspect 12)

The light-emitting device according to claim 5, wherein:
the first light source part comprises:
   an S-polarized first light source part configured to emit an S-polarized blue laser light, and
   a P-polarized first light source part configured to emit a P-polarized blue laser light;
the second light source part comprises:
   an S-polarized second light source part configured to emit an S-polarized green laser light, and
   a P-polarized second light source part configured to emit a P-polarized green laser light;
the third light source part comprises:
   an S-polarized third light source part configured to emit an S-polarized red laser light, and
   a P-polarized third light source part configured to emit a P-polarized red laser light;
in the laser light emitted from the light source, a first combined laser light and a second combined laser light are polarization-combined;
in the first combined laser light, the P-polarized red laser light, the P-polarized green laser light, and the P-polarized blue laser light are wavelength-combined; and
in the second combined laser light, the S-polarized red laser light, the S-polarized green laser light, and the S-polarized blue laser light are wavelength-combined.

### (aspect 13)

The light-emitting device according to claim 3, wherein:
the light source further comprises a first polarization-combining member;
the first light source part comprises a fourth light source part and a sixth light source part;
the first polarization-combining member is configured to receive wavelength-combined laser light in which laser light emitted from the fourth light source part and a laser light emitted from the sixth light source has been wavelength-combined;
the second light source part comprises a fifth light source part and a seventh light source part;
the first polarization-combining member is configured to receive wavelength-combined laser light in which laser light emitted from the fifth light source part and a laser light emitted from the seventh light source has been wavelength-combined; and
in the laser light emitted from the light source, the laser light emitted from the first light source part and the laser light emitted from the second light source part are polarization-combined.

### (aspect 14)

The light-emitting device according to any one of claim 2 to 13, wherein:
the first end part includes a first incident surface on which the first branched laser light is to be incident;
the second end part includes a second incident surface on which the second branched laser light is to be incident; and
a distance between a center of the first incident surface and a center of the second incident surface is not less than 1 mm and not more than 100 mm.

### (aspect 15)

The light-emitting device according to any one of claim 2 to 14, wherein:
the first end part includes a first incident surface on which the first branched laser light is to be incident;
the second end part includes a second incident surface on which the second branched laser light is to be incident; and
the first incident surface and the second incident surface are arranged so that the first incident surface and the second incident surface are oriented in a same direction.

### (aspect 16)

A vehicle, comprising:
a vehicle body; and
the light-emitting device according to any one of claim 1 to 15, which is mounted to the vehicle body.

The embodiments above are examples embodying the invention, but the invention is not limited to these embodiments. For example, additions, deletions, or modifications of some of the components or processes according to the embodiments above also are included in the invention. The embodiments above can be implemented in combination with each other.

## Claims

1. A light-emitting device comprising:
a light source configured to emit a laser light;
a first optical member configured to split the laser light into first branched laser light and second branched laser light by reflecting the first branched laser light and transmitting the second branched laser light; and
a first diffusing fiber comprising:
a first end part on which at least a portion of the first branched laser light reflected by the first optical member is incident, and
a second end part on which at least a portion of the second branched laser light is incident.

2. The light-emitting device according to claim 1, further comprising:
a second optical member configured to reflect at least a portion of the second branched laser light; wherein:
the second branched laser light reflected by the second optical member is incident on the second end part.

3. The light-emitting device according to claim 1 or 2, wherein:
the light source comprises a first light source part and a second light source part; and
in the laser light emitted from the light source, a first laser light emitted from the first light source part and a second laser light emitted from the second light source part are combined.

4. The light-emitting device according to claim 3, wherein:
the first laser light has a first peak wavelength; and
the second laser light has a second peak wavelength different from the first peak wavelength.

5. The light-emitting device according to claim 4, wherein:
the light source further comprises a third light source part configured to emit a third laser light having a third peak wavelength different from the first and second peak wavelengths;
the first laser light is a blue laser light;
the second laser light is a green laser light;
the third laser light is a red laser light; and
in the laser light emitted from the light source, the red laser light, the green laser light, and the blue laser light are wavelength-combined.

6. The light-emitting device according to any one of claim 2 to 5, further comprising:
a light-receiving element; wherein:
the second optical member is configured to split the second branched laser light into a third branched laser light and a fourth branched laser light by reflecting the third branched laser light and transmitting the fourth branched laser light;
the fourth branched laser light is incident on the light-receiving element.

7. The light-emitting device according to any one of claim 2 to 5, further comprising:
a light-receiving element; wherein:
a portion of the first branched laser light is incident on the first end part, is emitted from the second end part, is reflected by the second optical member, is reflected by the first optical member, and then is incident on the light-receiving element;
a portion of the second branched laser light is incident on the second end part, is emitted from the first end part, is transmitted through the first optical member, and then is incident on the light-receiving element.

8. The light-emitting device according to any one of claim 1 to 7, further comprising:
a polarizing member located between the light source and the first optical member.

9. The light-emitting device according to any one of claim 2 to 8, wherein:
the second optical member is configured to split the second branched laser light into a third branched laser light and a fourth branched laser light by reflecting the third branched laser light and transmitting the fourth branched laser light; and
the light-emitting device further comprises:
a third optical member configured to split the fourth branched laser light into a fifth branched laser light and a sixth branched laser light by reflecting the fifth branched laser light and transmitting the sixth branched laser light,
a fourth optical member configured to reflect at least a portion of the sixth branched laser light, and
a second diffusing fiber comprising:
a third end part on which the fifth branched laser light reflected by the third optical member is incident, and
a fourth end part on which the sixth branched laser light reflected by the fourth optical member is incident.

10. The light-emitting device according to claim 5, wherein:
the first light source part comprises:
an S-polarized first light source part configured to emit an S-polarized blue laser light, and
a P-polarized first light source part configured to emit a P-polarized blue laser light;
the second light source part comprises:
an S-polarized second light source part configured to emit an S-polarized green laser light, and
a P-polarized second light source part configured to emit a P-polarized green laser light;
the third light source part comprises:
an S-polarized third light source part configured to emit an S-polarized red laser light, and
a P-polarized third light source part configured to emit a P-polarized red laser light;
in the laser light emitted from the light source, a red combined laser light, a green combined laser light, and a blue combined laser light are wavelength-combined;
in the red combined laser light, the S-polarized red laser light and the P-polarized red laser light are polarization-combined;
in the green combined laser light, the S-polarized green laser light and the P-polarized green laser light are polarization-combined; and
in the blue combined laser light, the S-polarized blue laser light and the P-polarized blue laser light are polarization-combined.

11. The light-emitting device according to claim 3, wherein:
the light source further comprises a first polarization-combining member and a second polarization-combining member;
the first light source part comprises a fourth light source part and a fifth light source part;
the first light source part is configured such that a laser light emitted from the fourth light source part and a laser light emitted from the fifth light source part are polarization-combined by the first polarization-combining member;
the second light source part comprises a sixth light source part and a seventh light source part;
the second light source part is configured such that a laser light emitted from the sixth light source part and a laser light emitted from the seventh light source part are polarization-combined by the second polarization-combining member; and
in the laser light emitted from the light source, the laser light emitted from the first light source part and polarization-combined by the first polarization-combining member and the laser light emitted from the second light source part and polarization-combined by the second polarization-combining member are wavelength-combined.

12. The light-emitting device according to claim 5, wherein:
the first light source part comprises:
an S-polarized first light source part configured to emit an S-polarized blue laser light, and
a P-polarized first light source part configured to emit a P-polarized blue laser light;
the second light source part comprises:
an S-polarized second light source part configured to emit an S-polarized green laser light, and
a P-polarized second light source part configured to emit a P-polarized green laser light;
the third light source part comprises:
an S-polarized third light source part configured to emit an S-polarized red laser light, and
a P-polarized third light source part configured to emit a P-polarized red laser light;
in the laser light emitted from the light source, a first combined laser light and a second combined laser light are polarization-combined;
in the first combined laser light, the P-polarized red laser light, the P-polarized green laser light, and the P-polarized blue laser light are wavelength-combined; and
in the second combined laser light, the S-polarized red laser light, the S-polarized green laser light, and the S-polarized blue laser light are wavelength-combined.

13. The light-emitting device according to claim 3, wherein:
the light source further comprises a first polarization-combining member;
the first light source part comprises a fourth light source part and a sixth light source part;
the first polarization-combining member is configured to receive wavelength-combined laser light in which laser light emitted from the fourth light source part and a laser light emitted from the sixth light source has been wavelength-combined;
the second light source part comprises a fifth light source part and a seventh light source part;
the first polarization-combining member is configured to receive wavelength-combined laser light in which laser light emitted from the fifth light source part and a laser light emitted from the seventh light source has been wavelength-combined; and
in the laser light emitted from the light source, the laser light emitted from the first light source part and the laser light emitted from the second light source part are polarization-combined.

14. The light-emitting device according to any one of claim 2 to 13, wherein:
the first end part includes a first incident surface on which the first branched laser light is to be incident;
the second end part includes a second incident surface on which the second branched laser light is to be incident; and
a distance between a center of the first incident surface and a center of the second incident surface is not less than 1 mm and not more than 100 mm.

15. The light-emitting device according to any one of claim 2 to 14, wherein:
the first end part includes a first incident surface on which the first branched laser light is to be incident;
the second end part includes a second incident surface on which the second branched laser light is to be incident; and
the first incident surface and the second incident surface are arranged so that the first incident surface and the second incident surface are oriented in a same direction.
